(19) Europäisches Patentamt
European Patent Office
Office européen des brevets

(11) **EP 2 673 668 B1**

(12) **FASCICULE DE BREVET EUROPEEN**

(45) Date de publication et mention de la délivrance du brevet:
**21.10.2020 Bulletin 2020/43**

(21) Numéro de dépôt: **12707876.4**

(22) Date de dépôt: **07.02.2012**

(51) Int Cl.:
*G02B 6/293* (2006.01)     *H04J 14/02* (2006.01)

(86) Numéro de dépôt international:
**PCT/FR2012/050260**

(87) Numéro de publication internationale:
**WO 2012/107681 (16.08.2012 Gazette 2012/33)**

(54) **PROCEDE ET DISPOSITIF DE FILTRAGE OPTIQUE COUPE-BANDE ET DISPOSITIF D'INSERTION/EXTRACTION DE SOUS-BANDE OPTIQUE MULTIPLEXEE EN FREQUENCE DANS UN SIGNAL OPTIQUE**

OPTISCHES BANDPASS-FILTERVERFAHREN UND VORRICHTUNG DAFÜR SOWIE ZUM EINSETZEN/EXTRAHIEREN EINES FREQUENZ-MULTIPLEXIERTEN OPTISCHEN SUBBANDS IN EIN OPTISCHES SIGNAL BZW. AUS DIESEM

AN OPTICAL PASS-BAND FILTERING METHOD AND DEVICE AND A DEVICE FOR INSERTING/EXTRACTING A FREQUENCY MULTIPLEXED OPTICAL SUB-BAND INTO/FROM AN OPTICAL SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2011 FR 1151082**

(43) Date de publication de la demande:
**18.12.2013 Bulletin 2013/51**

(73) Titulaire: **ORANGE**
**75015 Paris (FR)**

(72) Inventeurs:
• **BLOUZA, Sofiene**
**2015 Le Kram (TN)**
• **KARAKI, Julie**
**Mont Liban (LB)**
• **PINCEMIN, Erwan**
**F-22290 Gommenec'h (FR)**

(74) Mandataire: **Plasseraud IP**
**66, rue de la Chaussée d'Antin**
**75440 Paris Cedex 09 (FR)**

(56) Documents cités:
**EP-A1- 1 492 260     US-A1- 2005 053 325**
**US-A1- 2010 284 696**

**Description**

L'invention concerne le domaine des dispositifs d'insertion/extraction de signaux optiques dans des réseaux de transmission optique.

Afin de faire face à la montée en débit des systèmes de transmission optique, les limites de la technologie de multiplexage en longueurs d'onde (WDM pour Wavelength Division Multiplexing en anglais) ont été régulièrement repoussées.

Sur des longues distances, pour que le débit puisse atteindre 100 Gbit/s par longueur d'onde, voire aller au-delà de ce seuil, il est possible de multiplexer des composantes à 10 Gbit/s (utilisant la technologie 10 GbEthernet) afin d'obtenir un canal à ultra haut débit de 100 Gbit/s (utilisant la technologie 100 GbEthernet).

Le besoin de désagréger ou d'agréger facilement de telles composantes dans un canal WDM en cours de transmission devient essentiel afin de permettre un haut degré de flexibilité dans les réseaux de transport optique à ultra haut débit. Cette désagrégation n'est intéressante aussi bien en termes de coût que de consommation énergétique qu'à la condition qu'elle soit tout optique.

Les formats de modulation pouvant être utilisés dans un premier temps à 100 Gbit/s sont basés sur une technique de modulation mono-porteuse (dite QPSK cohérent) peu adaptée à la commutation optique intra-canal.

Il est également possible d'utiliser le multiplexage en fréquences orthogonales (OFDM pour Orthogonal Frequency Division Multiplexing en anglais). Ce type de multiplexage est une technique de modulation multi-porteuse qui peut être mis en œuvre en utilisant une ou plusieurs sous-bandes portant le débit du canal WDM et représente un candidat très sérieux pour étendre la capacité du canal optique à 100 Gbps, 400 Gbps et 1 Tbps dans un futur plus ou moins proche.

En effet, le multiplexage OFDM assure intrinsèquement une robustesse face aux effets de la dispersion, qu'elle soit chromatique ou modale de polarisation PMD (Polarization Mode Dispersion en anglais). A ces avantages en termes de transmission s'ajoute la flexibilité apportée par la technologie multi-bande OFDM (MB-OFDM) en termes de commutation optique intra-canal ou plus globalement de "networking".

Ainsi, du fait de son approche multi-bande, le multiplexage OFDM est le candidat idéal pour mettre en œuvre la commutation optique intra-canal permettant de désagréger ou d'agréger facilement, à l'intérieur même d'un canal WDM, les sous-bandes OFDM indépendantes.

Pour pouvoir profiter de la flexibilité offerte par ce type de technologie MB-OFDM, des filtres "passe-bande" et "coupe-bande" sont requis pour sélectionner ou supprimer les sous-bandes en transit dans un nœud.

Actuellement, des filtres optiques "passe-bande" présentant une fonction de transfert de type "square flat-top" et des largeurs à mi-hauteur de l'ordre de 50 pm sont réalisables. En revanche, les filtres optiques "coupe-bande" actuellement disponibles sont peu sélectifs, peu accordables en longueur d'onde centrale et limités au niveau du profil de leur fonction de transfert ainsi qu'en termes de largeur spectrale. Rien n'assure que de tels filtres pourront être développés dans un futur proche avec les technologies actuellement employées, comme celle des commutateurs à sélection de longueur d'onde (WSS pour Wavelength Selective Switch en anglais).

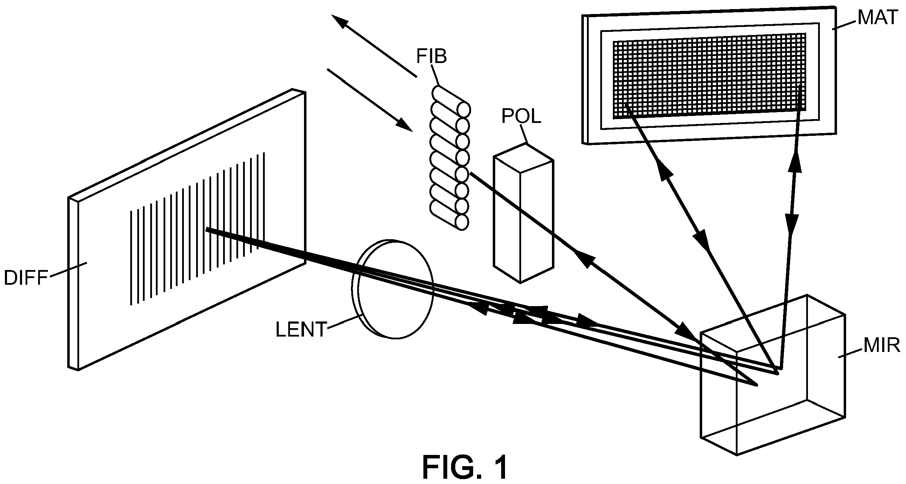

La figure 1 illustre un tel commutateur à sélection de longueur d'onde.

Un signal optique pénètre dans un tel commutateur par une fibre d'entrée du réseau de fibres FIB, transite par une composant optique de diversité de polarisation, puis est réfléchi sur un miroir cylindrique MIR, avant de transiter par une lentille LENT et d'être diffracté par un réseau DIFF, d'être réfléchie une deuxième fois par le miroir cylindrique MIR et d'être traité par une matrice MAT de cristaux liquides (LCoS pour Liquid Crystal on Silicon en anglais).

Cette matrice de cristaux liquides sert, d'une part, à commuter le signal optique pour le faire ressortir par une autre fibre de sortie du réseau de fibres FIB et, d'autre part, à atténuer le signal optique.

Un commutateur WSS a la particularité de pouvoir envoyer n'importe laquelle des longueurs d'onde qui arrive sur la fibre d'entrée vers n'importe laquelle des N fibres de sortie, et d'atténuer sélectivement ces différentes longueurs d'onde afin de pouvoir par exemple compenser la réponse non-plate d'une chaîne d'amplificateurs optiques.

Un commutateur WSS de taille classique (environ 15 cm de côté) présente typiquement une fonction de transfert d'une largeur spectrale minimale de 50 GHz. Si l'on veut que sa fonction de transfert soit encore plus sélective (autrement dit plus étroite), il faut soit diminuer la taille de chaque cellule de la matrice de cristaux liquides, soit éloigner la matrice de cristaux liquides du réseau de diffraction afin de permettre aux différentes composantes spectrales du signal d'entrée de se disperser encore plus spatialement.

La taille d'un tel commutateur WSS est donc sensiblement inversement proportionnelle à la largeur spectrale filtrée ce qui entraîne une augmentation de la taille du commutateur WSS au point de le rendre inutilisable dans la pratique quand il faut obtenir des largeurs spectrales de filtrage inférieures à 50 GHz.

La taille des composants étant un critère critique pour les opérateurs de réseaux de télécommunications, les commutateurs WSS ne sont pas adaptés pour du filtrage coupe-bande plus fin, et sont donc ainsi limités en termes de sélectivité en longueur d'onde. Ainsi, à l'heure actuelle, le filtre optique "coupe-bande" le plus performant affiche une largeur à mi-hauteur (i.e. à -3 dB) de l'ordre de 200 à 250 pm (soit de 25 à 31.25 GHz) et son profil est plus proche d'une gaussienne que du profil rectangulaire d'une porte.

Ces caractéristiques rendent ce type de filtre inutilisable pour des manipulations de bandes optiques requérant une sélectivité accrue, comme par exemple quand on souhaite supprimer, dans un canal MB-OFDM, une ou plusieurs sous-bandes dont la largeur peut varier par exemple de 50 pm à 400 pm (soit de 6.25 à 50 GHz), afin de réaliser une fonction "add/drop".

Des exemples et modes de réalisation de l'art antérieur peuvent être trouvés dans les documents US2010/284696 A1 et US2005/053325 A1.

Il existe donc actuellement un besoin de fournir, dans le domaine de la transmission optique, un filtre optique coupe-bande présentant une meilleure sélectivité que les filtres actuellement disponibles, ainsi qu'une plus grande accordabilité aussi bien en termes de largeur spectrale que de longueur d'onde centrale, pour pouvoir être utilisé dans des applications de filtrage plus fin que ce qui est nécessaire avec les technologies WDM actuelles, comme par exemple celui requis pour le filtrage de sous-bandes optiques multiplexées orthogonalement en fréquences.

Un objet de la présente invention est de proposer un dispositif de filtrage optique coupe-bande qui puisse offrir une meilleure sélectivité, une bande de coupure ajustable sur des bandes plus étroites et avec une fréquence centrale de bande supprimée plus facilement accordable, tout en conservant des dimensions de composant optique acceptables.

Un autre objet de la présente invention est de proposer un dispositif d'insertion/extraction permettant d'extraire et de remplacer une sous-bande optique multiplexée en fréquence au sein d'un signal optique.

Un autre objet de la présente invention est de proposer un nœud d'insertion/extraction permettant d'extraire ou de remplacer une sous-bade optique multiplexée en fréquence au sein d'un canal optique lui-même multiplexé en longueur d'onde dans un signal optique.

La présente invention propose à cet effet un dispositif de filtrage optique coupe-bande comprenant des moyens de duplication aptes à dupliquer un signal optique sur au moins un premier et un deuxième port de sortie, une première unité de filtrage optique, connectée au premier port de sortie des moyens de duplication, présentant une fonction de transfert avec une partie décroissante entre une première longueur d'onde de coupure et une première longueur d'onde d'extinction, une deuxième unité de filtrage optique, connectée au deuxième port de sortie des moyens de duplication, présentant une fonction de transfert avec une partie croissante entre une deuxième longueur d'onde d'extinction et une deuxième longueur d'onde de coupure, la deuxième longueur d'onde d'extinction étant supérieure à la première longueur d'onde d'extinction, et des moyens de couplage, connectés aux première et deuxième unités de filtrage optique et arrangés pour combiner les signaux optiques filtrés par lesdites unités de filtrage optique afin d'obtenir un signal optique filtré dans lequel la bande optique comprise entre la première et deuxième longueurs d'extinction est supprimée.

Dans un mode de réalisation avantageux, les première et deuxième unités de filtrage comprennent un filtre passe-bande optique présentant un profil essentiellement rectangulaire dans lequel le taux d'extinction entre la première longueur d'onde de coupure et la première longueur d'onde d'extinction, et entre la deuxième longueur d'onde de coupure et la deuxième longueur d'onde d'extinction, est d'au moins 30 dB. L'utilisation de filtres passe-bande optiques dans le dispositif de la présente invention permet d'obtenir une meilleure sélectivité globale.

Avantageusement, l'écart spectral entre la première et la deuxième longueur d'extinction est inférieur ou égal à 10 GHz, ce qui permet de supprimer de façon plus précise une sous-bande optique spécifique au sein d'un signal optique comprenant une pluralité de sous-bandes optiques multiplexées avec un faible intervalle spectral, comme c'est le cas pour un signal de type MB-OFDM.

Avantageusement, l'écart spectral entre la première longueur d'onde de coupure et la première longueur d'onde d'extinction et/ou l'écart spectral entre la deuxième longueur d'onde de coupure et la deuxième longueur d'onde d'extinction est inférieur ou égal à 5 GHz, ce qui permet de supprimer une sous-bande optique sans impacter la sous-bande optique voisine au sein d'un signal optique comprenant une pluralité de sous-bandes optiques multiplexées avec un faible intervalle spectral, comme c'est le cas pour un signal de type MB-OFDM.

Selon un autre mode de réalisation, les moyens de duplication sont aptes en outre à dupliquer le signal optique sur un troisième port de sortie, la fonction de transfert de la deuxième unité de filtrage optique présente en outre une partie décroissante entre une troisième longueur d'onde de coupure, supérieure à la deuxième longueur d'onde de coupure, et une troisième longueur d'onde d'extinction, et le dispositif comprend une troisième unité de filtrage optique, connectée au troisième port de sortie des moyens de duplication, présentant une fonction de transfert avec une partie croissante entre une quatrième longueur d'onde d'extinction et une quatrième longueur d'onde de coupure, la quatrième longueur d'onde d'extinction étant supérieure à la troisième longueur d'onde d'extinction, et les moyens de couplage sont connectés en outre à la troisième unité de filtrage et arrangés pour combiner les signaux optiques filtrés par lesdites unités de filtrage optique afin d'obtenir un signal optique filtré dans lequel, en outre, la bande optique comprise entre les troisième et quatrième longueurs d'extinction est supprimée.

Cet autre mode de réalisation permet de filtrer plusieurs sous-bandes optiques non contiguës au sein d'un signal optique comprenant une pluralité de sous-bandes optiques multiplexées en fréquence.

La présente invention propose également l'utilisation du dispositif de filtrage optique coupe-bande ci-avant afin de filtrer au moins une sous-bande optique d'un signal optique comprenant une pluralité de sous-bandes optiques multiplexées en fréquence.

La présente invention propose en outre un dispositif optique d'insertion/extraction comprenant des moyens de duplication aptes à dupliquer un signal optique en un premier signal optique dupliqué et un deuxième signal optique dupliqué, une unité de filtrage optique passe-bande arrangée pour extraire une première sous-bande optique du premier signal optique dupliqué afin de fournir ladite première sous-bande optique en sortie du dispositif, le dispositif de filtrage optique coupe-bande ci-avant, arrangé pour supprimer une deuxième sous-bande optique dans le deuxième signal optique dupliqué, et des moyens de couplage aptes à coupler le signal optique filtré par le dispositif de filtrage optique coupe-bande avec un signal optique comprenant une sous-bande optique de remplacement comprise dans l'intervalle spectral défini par la deuxième sous-bande optique, afin de fournir en sortie un signal optique modifié dans lequel la deuxième sous-bande optique est remplacée par la sous-bande optique de remplacement.

La présente invention propose également un nœud optique d'insertion/extraction d'au moins une première sous-bande optique appartenant à un premier canal optique compris dans un signal optique comportant une pluralité de canaux optiques multiplexés en longueur d'onde, ce nœud optique comprenant des moyens de duplication aptes à dupliquer le signal optique en un premier signal optique dupliqué et un deuxième signal optique dupliqué, des moyens d'extraction comprenant un premier moyen de démultiplexage de longueur d'onde arrangé pour extraire au moins le premier canal optique du premier signal optique dupliqué et au moins un moyen de filtrage optique passe-bande arrangé pour extraire la première sous-bande optique du premier canal optique extrait, afin de fournir en sortie un signal optique comprenant la sous-première bande optique, un deuxième moyen de démultiplexage de longueur d'onde arrangé pour extraire au moins le premier canal optique du deuxième signal optique dupliqué, un premier dispositif de filtrage optique coupe-bande tel que décrit ci-avant, arrangé pour supprimer la première sous-bande optique dans le premier canal optique extrait afin d'obtenir un premier canal optique filtré, et des premiers moyens de couplage aptes à coupler le premier canal optique filtré avec un signal optique comprenant une première sous-bande optique de remplacement afin de fournir en sortie un premier canal optique modifié dans lequel la première sous-bande optique est remplacée par la première sous-bande optique de remplacement.

Selon un mode de réalisation de ce nœud, le deuxième moyen de démultiplexage de longueur d'onde est arrangé en outre pour extraire du deuxième signal optique dupliqué un deuxième canal optique comprenant une deuxième sous-bande optique, et le nœud comprend un deuxième dispositif de filtrage optique coupe-bande tel que décrit ci-avant, arrangé pour supprimer la deuxième sous-bande optique dans le deuxième canal optique extrait afin d'obtenir un deuxième canal optique filtré, des deuxièmes moyens de couplage aptes à coupler le deuxième canal optique filtré avec un signal optique comprenant une deuxième sous-bande optique de remplacement afin de fournir en sortie un deuxième canal optique modifié dans lequel la deuxième sous-bande optique est remplacée par la deuxième sous-bande optique de remplacement, et des moyens de multiplexage de longueurs d'onde arrangés pour multiplexer au moins les premier et deuxième canaux optique modifiés afin d'obtenir un signal optique modifié dans lequel les première et deuxième sous-bandes ont été remplacées respectivement par les première et deuxième sous-bande optique de remplacement.

La présente invention propose également un procédé de filtrage optique coupe-bande d'au moins une première bande optique dans un signal optique, ce procédé comprenant :

la duplication du signal optique en au moins deux signaux optiques dupliqués ;
le filtrage du premier signal optique dupliqué au moyen d'une première unité de filtrage optique passe-bande présentant une fonction de transfert avec une partie décroissante entre une première longueur d'onde de coupure et une première longueur d'onde d'extinction ;
le filtrage du deuxième signal optique dupliqué au moyen d'une deuxième unité de filtrage optique passe-bande présentant une fonction de transfert avec une partie croissante entre une deuxième longueur d'onde d'extinction et une deuxième longueur d'onde de coupure ; et
la combinaison des deux signaux optiques filtrés d'obtenir un signal optique filtré dans lequel la bande optique comprise entre les première et deuxième longueurs d'extinction est supprimée.

Selon un mode de réalisation, le signal optique est dupliqué en trois signaux optiques dupliqués lors de l'étape de duplication, la fonction de transfert de la deuxième unité de filtrage optique coupe-bande présente en outre une partie décroissante entre une troisième longueur d'onde de coupure, supérieure à la deuxième longueur d'onde de coupure, et une troisième longueur d'onde d'extinction, le procédé comprend en outre le filtrage du troisième signal optique dupliqué au moyen d'une troisième unité de filtrage optique passe-bande présentant une fonction de transfert avec une partie croissante entre une quatrième longueur d'onde d'extinction et une quatrième longueur d'onde de coupure et les trois signaux optiques filtrés sont combinés, lors de l'étape de combinaison, afin d'obtenir un signal optique filtré dans lequel, en outre, la bande optique comprise entre les troisième et quatrième longueurs d'extinction est supprimée.

La présente invention propose également un procédé de remplacement d'au moins une première sous-bande optique dans un signal optique, ce procédé comprenant :

la suppression de la première sous-bande optique du signal optique au moyen du procédé de filtrage optique coupe-bande ci-avant afin d'obtenir un signal filtré; et

l'addition d'une sous-bande optique de remplacement comprise spectralement dans la première sous-bande optique au signal optique filtré afin d'obtenir un signal optique modifié dans lequel la première sous-bande optique est remplacée par la sous-bande optique de remplacement.

La présente invention propose en outre un procédé d'extraction et de remplacement d'au moins une première sous-bande optique dans un signal optique, le procédé comprenant :

la duplication du signal optique en au moins deux signaux optiques dupliqués ;

l'extraction de la première sous-bande optique à partir du premier signal optique dupliqué au moyen de moyens de filtrage passe-bande ; et

le remplacement de la première sous-bande optique par une sous-bande optique de remplacement dans le deuxième signal optique dupliqué au moyen du procédé de remplacement ci-avant.

La présente invention propose aussi un procédé de remplacement d'au moins une première sous-bande optique dans un premier canal optique d'un signal optique composée d'une pluralité de canaux optiques multiplexés en longueurs d'onde, le procédé comprenant :

l'extraction du premier canal optique à partir du signal optique ;

la suppression de la première sous-bande optique du signal optique au moyen du procédé de filtrage optique coupe-bande ci-avant, afin d'obtenir un premier canal filtré ; et

l'addition d'une première sous-bande optique de remplacement comprise spectralement dans la première sous-bande optique au premier canal filtré afin d'obtenir un canal optique modifié dans lequel la première sous-bande optique est remplacée par la première sous-bande optique de remplacement.

La présente invention propose par ailleurs un procédé d'extraction et de remplacement d'au moins une première sous-bande optique dans un premier canal optique d'un signal optique composée d'une pluralité de canaux optiques multiplexés en longueurs d'onde, ce procédé comprenant :

la duplication du signal optique en au moins deux signaux optiques dupliqués ;

l'extraction de la première sous-bande optique à partir du premier signal optique dupliqué au moyen de moyens de démultiplexage et de moyens de filtrage passe-bande ; et

le remplacement de la première sous-bande optique par une sous-bande optique de remplacement dans le premier canal optique du deuxième signal optique dupliqué au moyen du procédé de remplacement ci-avant.

D'autres caractéristiques et avantages de l'invention apparaîtront à l'examen de la description détaillée ci-après, et des dessins annexés sur lesquels, outre la figure 1 précédemment discutée :

- la figure 2A représente un dispositif de filtrage optique coupe-bande selon la présente invention ;
- la figure 2B illustre en détail la fonction de transfert globale du dispositif de filtrage optique coupe-bande selon la présente invention ;
- la figure 2C illustre un signal optique comprenant 4 sous-bandes optiques multiplexées en fréquence superposé aux fonctions de transfert respectives d'un filtre optique coupe-bande de type WSS et d'un dispositif de filtrage optique coupe-bande selon la présente invention ;
- la figure 2D illustre les étapes d'un procédé de filtrage optique coupe-bande selon la présente invention ;
- la figure 3A représente schématiquement un premier mode de réalisation du dispositif de filtrage optique coupe-bande selon la présente invention visant à supprimer deux sous-bandes optiques ;
- la figure 3B illustre en détail la fonction de transfert globale du dispositif de filtrage optique coupe-bande selon le premier mode de réalisation ci-avant ;
- la figure 3C illustre les étapes d'un procédé de filtrage optique coupe-bande selon le premier mode de réalisation de la présente invention ;
- la figure 4A représente schématiquement un dispositif d'insertion/extraction d'une sous-bande optique dans un signal optique selon la présente invention ;
- la figure 4B illustre les étapes d'un procédé d'extraction et de remplacement d'une sous-bande optique dans un signal optique selon la présente invention ;
- la figure 5A représente schématiquement un nœud d'insertion/extraction d'une sous-bande optique au sein d'un canal optique d'un signal optique selon la présente invention ; et
- la figure 5B illustre les étapes d'un procédé d'extraction et de remplacement d'une sous-bande optique au sein d'un canal optique d'un signal optique selon la présente invention.

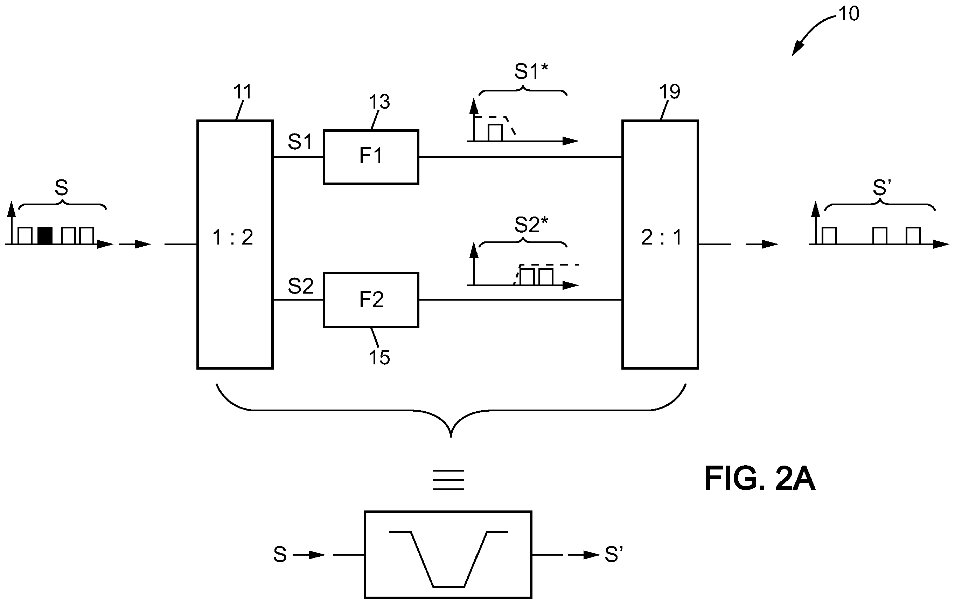

On se réfère tout d'abord à la **figure 2A** sur laquelle est illustré un dispositif de filtrage optique coupe-bande 10 selon la présente invention.

Ce dispositif comprend, d'une part, des moyens de duplication 11 aptes à dupliquer un signal optique S reçu sur un port d'entrée en au moins deux signaux dupliqués S1 et S2 fournis sur des ports de sortie respectifs.

Cette opération de duplication peut être effectuée par exemple en divisant le signal optique S reçu en autant de signaux optiques identiques que les moyens de duplications 11 ont de ports de sortie. Dans le cas d'une division de puissance, la puissance des signaux dupliqués est réduite par rapport au signal S d'origine. La répartition de la puissance optique du signal optique d'entrée S entre les deux signaux dupliqués S1 et S2 est avantageusement de l'ordre de 50/50, ou peut se situer dans un intervalle de répartition allant de 50/50 à 45/55, afin d'obtenir deux signaux dupliqués de puissance globalement similaire. Les moyens de duplication 11 peuvent ainsi consister en un coupleur 1:2, voire un coupleur 55/45.

Le dispositif de filtrage optique coupe-bande 10 comprend par ailleurs au moins une première unité de filtrage optique 13, connectée au premier port de sortie des moyens de duplication 11 afin de recevoir le signal dupliqué S1, ainsi qu'une deuxième unité de filtrage optique 15, connectée au deuxième port de sortie des moyens de duplication 11 afin de recevoir le signal dupliqué S2.

La première unité de filtrage optique 13 présente une fonction de transfert TP1(λ) avec une partie décroissante entre une première longueur d'onde de coupure λc1, pour laquelle la fonction de transfert TP1(λ) prend une valeur inférieure de 10dB à la valeur maximale de cette fonction de transfert, et une première longueur d'onde d'extinction λm1 pour laquelle cette fonction de transfert prend une valeur substantiellement nulle, par exemple de 40 dB inférieure à la valeur maximale de la fonction de transfert. Ce paramètre, que l'on peut appeler "pente des flancs" du filtre (ou "edges slope" en anglais) s'exprime en dB/nm.

Inversement, la deuxième unité de filtrage optique 15 présente une fonction de transfert TP2(λ) avec une partie croissante entre une deuxième longueur d'onde d'extinction λm2, pour laquelle cette fonction de transfert TP2(λ) prend une valeur substantiellement nulle (par exemple de 40 dB inférieure à la valeur maximale de la fonction de transfert), et une deuxième longueur d'onde de coupure λc2, pour laquelle la fonction de transfert TP2(λ) prend une valeur inférieure de IOdB à la valeur maximale de cette fonction de transfert.

En particulier, les première et deuxième unités de filtrage 13 et 15 peuvent comprendre un filtre passe-bande optique présentant un profil essentiellement rectangulaire dans lequel le taux d'extinction entre la première longueur d'onde de coupure λc1 et la première longueur d'onde d'extinction λm1, et entre la deuxième longueur d'onde de coupure λc2 et la deuxième longueur d'onde d'extinction λm2, est d'au moins 30 dB.

Le dispositif de filtrage optique coupe-bande comprend également des moyens de couplage 19 connectés aux ports de sortie des première et deuxième unités de filtrage optique 13 et 15 par deux ports d'entrée respectifs. Ces moyens 19 sont arrangés pour combiner les signaux optiques respectivement filtrés par ces unités de filtrage optique afin d'obtenir un signal optique filtré S' dans lequel la bande optique comprise entre les première et deuxième longueurs d'onde d'extinction λm1 et λm2 est supprimée, ce signal optique filtré S' étant alors fourni sur le port de sortie des moyens de couplage, lequel correspond au port de sortie du dispositif de filtrage optique coupe-bande 10. De tels moyens de couplage 19 peuvent consister en un coupleur 2:1, voire un coupleur 55/45.

Pour illustrer l'invention, le signal S est représenté comme étant un signal optique composé de 4 sous-bandes optiques multiplexées en fréquence. Par le terme « sous-bande optique », on entend ici un signal optique situé dans une bande de fréquence prédéterminée et pouvant être multiplexé avec d'autres « sous-bandes optiques » similaires pour former un signal multiplexé, par exemple en fréquence au moyen de la technologie OFDM.

Ici, on cherche à supprimer en particulier la deuxième sous-bande du signal S. La première unité de filtrage 13 laisse passer la première sous-bande de ce signal, tandis que la deuxième unité de filtrage 15 laisse passer les troisième et quatrième sous-bandes de ce signal. Le signal S' résultant de la combinaison des sorties de ces deux unités de filtrage est donc bien un signal dans lequel la deuxième sous-bande a été supprimée et le dispositif 10 pris dans son ensemble est bien équivalent à un filtre optique coupe-bande.

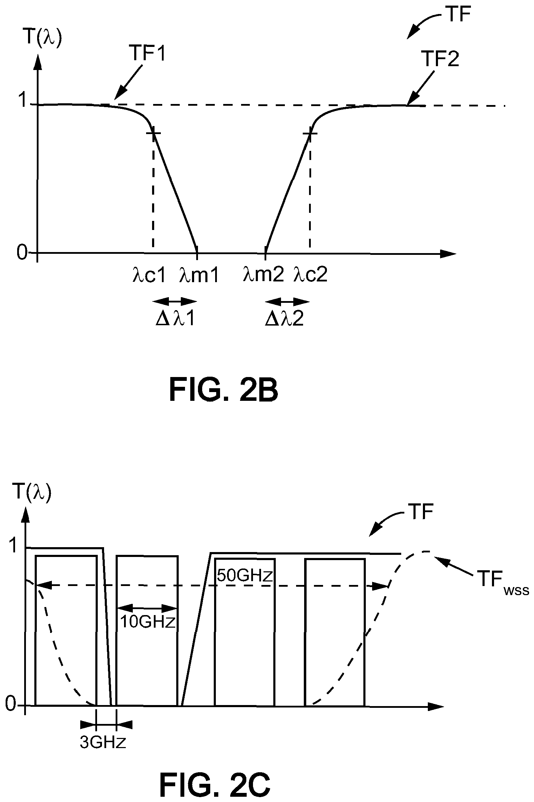

Afin de mieux comprendre l'invention, on se réfère maintenant à la **figure 2B** qui illustre plus en détail la fonction de transfert globale TF(λ) du dispositif de filtrage optique coupe-bande 10, ainsi que les fonctions de transfert TP1(λ) et TP2(λ) respectives des unités de filtrage 13 et 15.

En particulier, la fonction de transfert TP1(λ) présente une partie décroissante entre la première longueur d'onde de coupure λc1, où sa valeur se situe substantiellement 10dB en dessous de son maximum, et la première longueur d'extinction λm1, qui correspond substantiellement à la longueur d'onde pour laquelle la fonction de transfert TP1(λ) atteint une valeur substantiellement nulle (par exemple de 40 dB inférieure à la valeur maximale de la fonction de transfert). Au-delà de cette longueur d'extinction λm1, la valeur de la fonction de transfert reste substantiellement nulle au moins jusqu'à la deuxième longueur d'extinction λm2 de la fonction de transfert TF2(λ).

Une telle fonction de transfert TF1(λ), qui peut être vue comme correspondant au moins partiellement à un filtre optique passe-haut, peut notamment être obtenue avec un filtre passe-bande optique, par exemple avec un profil essentiellement rectangulaire, également appelé « square flat-top » en anglais, si l'on considère seulement la partie décroissante de cette fonction de transfert.

Pour sa part, la fonction de transfert TP2(λ) présente une partie croissante entre la deuxième longueur d'onde d'extinction λm2, en-deçà de laquelle, la valeur de la fonction de transfert TP2(λ) reste substantiellement nulle au moins jusqu'à la première longueur d'extinction λm1, et la deuxième longueur d'onde de coupure λc2 où la valeur de cette fonction TP2(λ) atteint un seuil se situant substantiellement 10 dB en dessous de son maximum.

Similairement, une telle fonction de transfert TF2(λ), qui peut être vue comme correspondant au moins partiellement à un filtre optique passe-bas, peut notamment être obtenu avec un filtre passe-bande optique, par exemple avec un profil essentiellement rectangulaire, si l'on considère seulement la partie croissante de cette fonction de transfert.

Ainsi, la fonction de transfert globale TF du dispositif de filtrage optique décrit en figure 1 correspond à la superposition des fonctions de transfert TP1(λ) et TF2(λ), dans laquelle la bande optique situé entre les longueurs d'onde d'extinction λm1 et λm2 est supprimée, en d'autres termes bloquée, tandis que les longueurs d'onde inférieures à la première longueur d'onde de coupure λc1 ou supérieures à la deuxième longueur d'onde de coupure λc2 passent à travers ce dispositif.

Cette fonction de transfert globale TF présente donc bien une forme associée à un filtrage optique coupe-bande supprimant la bande optique entre λm1 et λm2.

Le caractère sélectif d'un tel dispositif de filtrage optique coupe-bande est lié à la capacité de sa fonction de transfert TF de passer rapidement, en termes de longueur d'onde, d'une valeur proche de son maximum (correspondant à une situation de transmission du signal optique) à une valeur proche de zéro (correspondant à une situation de blocage du signal optique).

Ce caractère sélectif peut être caractérisé, d'une part, par l'écart Δλ1 entre les longueurs d'onde λc1 et λm1 et, d'autre part, par l'écart Δλ2 entre les longueurs d'onde λm2 et λc2. Ainsi, plus cet écart Δλ1 est faible, plus la pente de la partie décroissante de la fonction TF est forte, et plus le dispositif est sélectif sur la gauche de la bande optique supprimée. Réciproquement, plus l'écart Δλ2 est faible, plus la pente de la partie croissante de la fonction TF est forte, et plus le dispositif est sélectif sur la droite de la bande optique supprimée.

Il est aussi possible d'utiliser le concept de « pente de flanc » (edge slope en anglais) pour caractériser le caractère sélectif d'un filtre, cette pente de flanc correspondant au ratio (en valeur absolue) entre, d'une part, la différence de puissance (en dB) entre la valeur prise par la fonction TF pour la longueur d'onde de coupure et la valeur prise par la fonction TF pour la longueur d'onde de d'extinction correspondante et, d'autre part, l'écart spectral entre ces deux longueurs d'onde.

En d'autres termes, la pente de flanc PF$_1$ sur la partie décroissante de la fonction TF décrite à la figure 2B, est définie selon l'équation suivante :

$$PF_1 = \left| \frac{TF1(\lambda c1) - TF1(\lambda m1)}{\Delta \lambda 1} \right|$$

Et la pente de flanc PF$_2$ sur la partie croissante de la fonction TF est définie selon l'équation suivante :

$$PF_2 = \left| \frac{TF2(\lambda m2) - TF2(\lambda c2)}{\Delta \lambda 2} \right|$$

On conçoit bien ici que plus ces pentes de flanc sont élevées en valeur, plus le filtre optique coupe-bande selon l'invention est sélectif.

Comme déjà indiqué précédemment, en matière de composants de filtrage optique actuellement disponibles, les rares filtres optiques coupe-bande disponibles, comme par exemple les filtres de type "Wavelength Selective Switch" présentés précédemment ou les filtres de type "Wavelength Blocker" basés sur la concaténation d'un réseau de diffraction et d'une matrice de miroir MEMS ou une matrice de cristaux liquides, présentent une faible sélectivité spectrale, typiquement de l'ordre de 400 pm ou 50 GHz, insuffisante pour bloquer une sous-bande optique tout en laissant passer la sous-bande optique voisine dans un multiplex de sous-bandes multiplexées en fréquence où l'intervalle entre sous-bandes est typiquement de l'ordre de 5 GHz (soit 40 pm).

De plus, en termes de largeur spectrale cette fois-ci, les filtres optiques de type "Wavelength Selective Switch" ou de type "Wavelength blocker" actuels présentent une bande de coupure plutôt de l'ordre de 50 GHz (soit 400 pm), ce qui rend de tels filtres inutilisables lorsqu'il s'agit de bloquer une sous-bande optique spécifique, notamment quand il s'agit d'une sous-bande optique dans un multiplex de sous-bandes multiplexées en fréquence dont la largeur est typiquement de l'ordre de 10 GHz (soit 50 pm). Avec de tels multiplex, les filtres optiques de type "Wavelength Selective Switch" ou de type "Wavelength blocker" actuels ne peuvent pas bloquer moins de 4 sous-bandes optiques d'un coup.

Comme indiqué précédemment, pour atteindre de tels niveaux de sélectivité ou de largeur spectrale avec de tels filtres optiques, il faut éloigner la matrice de cristaux liquides dans des proportions telles que cela pose un problème au niveau encombrement et donc prohibe son intégration dans un nœud optique de réseau.

A contrario, parmi les composants de filtrage optique actuellement disponibles, il existe des filtres optiques passe-bande présentant un véritable profil essentiellement rectangulaire comme les filtres utilisant la technologie dite en "optique espace libre" (Free Space Optics en anglais) associant un réseau de diffraction à un monochromateur (autrement dit à une fente qui va venir sélectionner une zone prédéterminée du spectre diffracté).

Ces filtres optiques passe-bande présentent une sélectivité bien plus grande, avec des écarts entre longueur d'onde de coupure et longueur d'onde d'extinction inférieur sou égaux à 5 GHz (ou 40 pm), ce qui permet de bloquer une sous-bande optique tout en laissant passer la sous-bande optique voisine dans un multiplex de sous-bandes multiplexées en fréquence espacées de 5 GHz.

Avec de tels filtres optiques passe-bande, on peut atteindre des pentes de flancs élevées, supérieures ou égales à 750 dB/nm, par exemple de l'ordre de 800 dB/nm, ce qui représente une différence de puissance de transmission du filtre de 40 dB sur 50 pm (ou 6.25 GHz).

La présente invention utilise donc le fait que les filtres optiques passe-bande disponibles offrent une meilleure sélectivité que les filtres optiques coupe-bande disponibles, pour construire un filtre optique coupe-bande à partir de tels filtres optiques passe-bande afin d'obtenir une sélectivité accrue.

Outre son caractère sélectif, on voit bien également sur la figure 1B que le dispositif de filtrage de la présente invention permet d'obtenir des largeurs de bande de coupure et des fréquences centrales de bande coupure plus ajustables qu'avec les filtres optiques coupe-bande traditionnels.

En effet, dans le dispositif de filtrage de la présente invention, l'ajustement individuel des fréquences de coupure $\lambda c1$ et $\lambda c2$ des première et deuxième unités de filtrage permet de régler, d'une part, la largeur de la bande optique supprimée ainsi que, d'autre part, la fréquence centrale de cette bande qui correspond substantiellement à la valeur médiane entre ces deux fréquences de coupure.

Le fait de pouvoir agir sur les deux unités de filtrage, par exemple grâce à des moyens de contrôle connectés à ces deux unités, pour régler ces deux paramètres permet un ajustement plus fin de ces deux paramètres que ce qui est possible avec les filtres optiques coupe-bande traditionnels, notamment si les unités de filtrage 13 et 15 sont des filtres optiques passe-bande en espace libre (« Free Space Optics ») associant un réseau de diffraction à un monochromateur dans lesquels la fréquence de coupure peut être accordée avec une grande précision.

Cela permet notamment d'obtenir un filtrage coupe-bande avec des pentes de flancs de filtre de l'ordre de 800 dB/nm ce qui est impossible à atteindre aujourd'hui avec les filtres optiques coupe-bande de type "Wavelength Selective Switch" ou "Wavelength Blocker". Une telle largeur de bande supprimée est particulièrement avantageuse dans le domaine du multiplexage optique en fréquence où les sous-bandes optiques peuvent présenter des largeurs de cet ordre. Une sous-bande optique particulière peut alors être supprimée sans que cela n'ait d'impact sur les sous-bandes optiques voisines.

Ces différents avantages sont illustrés plus en détail sur la **figure 2C,** qui illustre un signal optique comprenant 4 sous-bandes optiques multiplexées en fréquence, comme indiqué dans la figure 2A, superposé aux fonctions de transferts $TF_{WSS}$ d'un filtre optique coupe-bande WSS et TF d'un dispositif de filtrage optique coupe-bande selon la présente invention, sous forme normalisée.

A titre d'exemple, ces sous-bandes optiques sont larges de 10 GHz et espacées de 5 GHZ.

On voit bien que la fonction de transfert TF permet de couper la deuxième sous-bande optique sans toucher aux autres sous-bandes optiques, du fait de sa plus grande sélectivité potentielle, ce qui ne peut pas être réalisé avec la fonction de transfert $TF_{WSS}$ typique d'un filtre optique coupe-bande de type "Wavelength Selective Switch" ou "Wavelength Blocker" présentant un profil de type "flat top" avec une largeur de coupure de l'ordre de 400 pm ou 50 GHz, mieux adapté au filtrage d'un canal entier plutôt qu'au filtrage d'une sous-bande OFDM typique de 10 GHz.

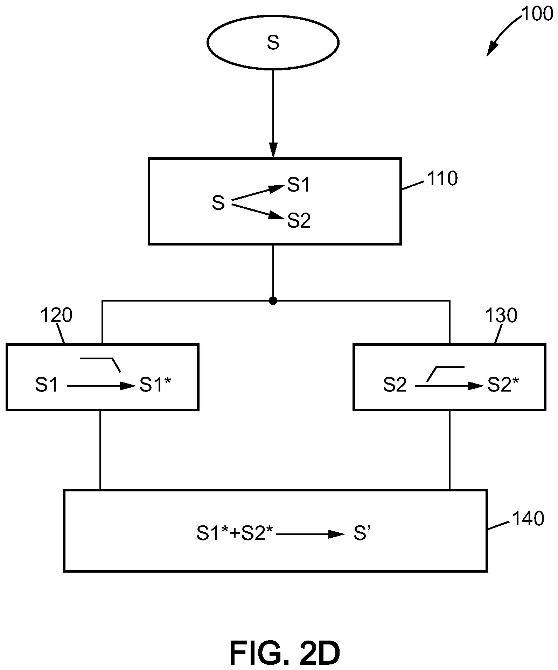

On se réfère maintenant à la **figure 2D** sur laquelle sont illustrées les étapes d'un procédé 100 de filtrage optique coupe-bande d'une première bande optique dans un signal optique, lequel peut être réalisé au moyen du dispositif 10 décrit ci-avant.

Ce procédé 100 comprend une première étape 110 de duplication du signal optique S en au moins deux signaux optiques dupliqués S1 et S2.

Ce procédé 100 comprend ensuite, d'une part, le filtrage 120 du premier signal optique dupliqué S1 au moyen d'une première unité de filtrage optique passe-bande 13 présentant une fonction de transfert TF1 avec une partie décroissante entre une première longueur d'onde de coupure $\lambda c1$ et une première longueur d'onde d'extinction $\lambda m1$, afin d'obtenir un premier signal filtré S1*.

Parallèlement, ce procédé 100 comprend le filtrage 130 du deuxième signal optique dupliqué S2 au moyen d'une deuxième unité de filtrage optique passe-bande 15 présentant une fonction de transfert TF2 avec une partie croissante entre une deuxième longueur d'onde d'extinction $\lambda m2$ et une deuxième longueur d'onde de coupure $\lambda c2$, afin d'obtenir un deuxième signal filtré S2*.

Une fois les deux signaux filtrés S1* et S2* obtenus, le procédé 100 comprend une étape 140 de combinaison de ces deux signaux optiques filtrés afin d'obtenir un signal optique modifié S' dans lequel la bande optique comprise entre les première et deuxième longueurs d'extinction $\lambda m1$ et $\lambda m2$ est supprimée.

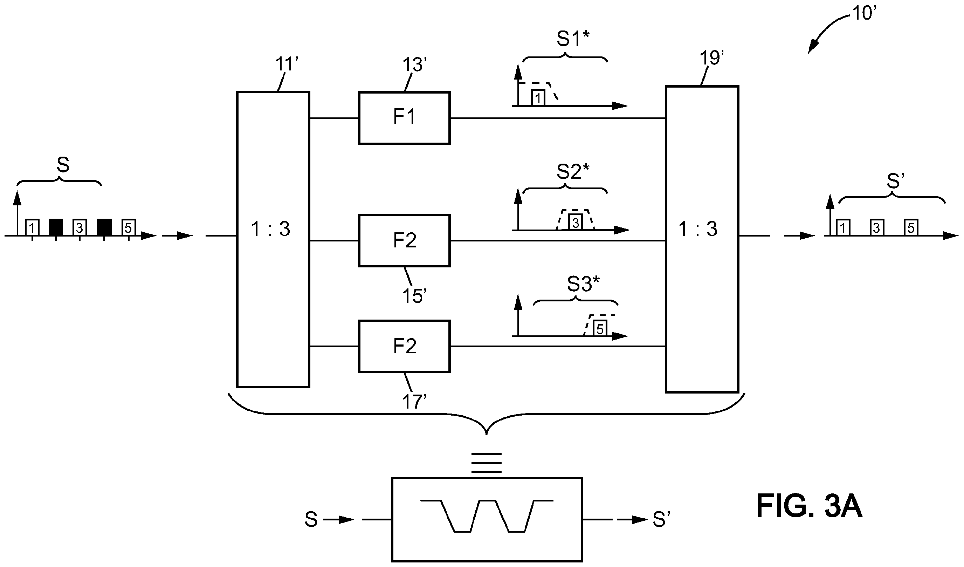

Le principe de l'invention ne se limite pas à la construction d'un dispositif de filtrage optique coupe-bande supprimant une seule bande optique, mais peut s'étendre à la suppression d'une pluralité de sous-bandes optiques, comme cela est illustré ci-après sur la **figure 3A.**

Cette figure 3A représente schématique un mode de réalisation du dispositif de filtrage optique coupe-bande selon la présente invention visant à supprimer deux sous-bandes optiques, afin d'illustrer avec un cas simple la suppression d'une pluralité de sous-bandes.

Ce dispositif 10' comprend, d'une part, des moyens de duplication 11' aptes à dupliquer un signal optique S, reçu sur un port d'entrée, en trois signaux dupliqués S1,S2,S3 fournis respectivement sur trois ports de sortie. Ces moyens 11' peuvent prendre la forme par exemple d'un coupleur optique 1:3.

Ce dispositif 11' est connecté à trois unités de filtrage optique 13', 15' et 17' respectivement par ses trois ports de sortie.

La première unité de filtrage optique 13' est similaire à la première unité de filtrage optique 13, et présente ainsi une fonction de transfert TP1($\lambda$) avec une partie décroissante entre une première longueur d'onde de coupure $\lambda c1$ et une première longueur d'onde d'extinction $\lambda m1$.

La deuxième unité de filtrage optique 15' présente une fonction de transfert TF2($\lambda$) avec une partie croissante entre une deuxième longueur d'onde d'extinction $\lambda m2$ et une deuxième longueur d'onde de coupure $\lambda c2$, similairement à la deuxième unité de filtrage optique 15. Cependant, cette fonction de transfert TP2($\lambda$) présente en outre une partie décroissante entre une troisième longueur d'onde de coupure $\lambda c3$, supérieure à la deuxième longueur d'onde de coupure $\lambda c2$, et une troisième longueur d'onde d'extinction $\lambda m3$ pour laquelle ladite fonction de transfert TF2($\lambda$) prend une valeur substantiellement nulle.

En d'autres termes, la deuxième unité de filtrage optique 15' peut être réalisée sous la forme d'un filtre passe-bande optique laissant passer une bande optique comprise substantiellement entre les longueurs d'onde de coupure $\lambda c2$ et $\lambda c3$.

La troisième unité de filtrage optique 17' présente, pour sa part, une fonction de transfert TF3($\lambda$) avec une partie croissante entre une quatrième longueur d'onde d'extinction $\lambda m4$, pour laquelle cette fonction de transfert TF3($\lambda$) prend une valeur substantiellement nulle et qui est supérieure à la troisième longueur d'onde d'extinction $\lambda m3$, et une quatrième longueur d'onde de coupure $\lambda c4$. En ce sens, cette troisième unité de filtrage 17' est similaire à l'unité de filtrage optique 15 illustrée à la figure 2A.

Ces trois unités de filtrage optique ont des sorties couplées respectivement aux trois entrées de moyens de couplage 19', lesquels sont alors arrangés pour combiner les signaux optiques filtrés par ces trois unités de filtrage optique afin d'obtenir un signal optique filtré S' dans lequel une première bande optique comprise entre les première et deuxième longueurs d'extinction $\lambda m1, \lambda m2$ ainsi qu'une deuxième bande optique comprise entre les troisième et quatrième longueurs d'extinction $\lambda m3, \lambda m4$ sont supprimées. Ce signal S' est alors fourni sur la sortie des moyens de couplage 19', laquelle correspond de fait à la sortie du dispositif 10'.

Ainsi, en appliquant un signal optique S comprenant cinq sous-bandes optiques multiplexées en fréquence comme illustré sur la figure 3A, ce dispositif 10' est capable de fournir en sortie un signal optique S'ne comprenant plus que les première, troisième et cinquième sous-bande optiques, c'est-à-dire où les deuxième et quatrième sous-bandes optiques (grisées sur la figure 3A) ont été supprimées.

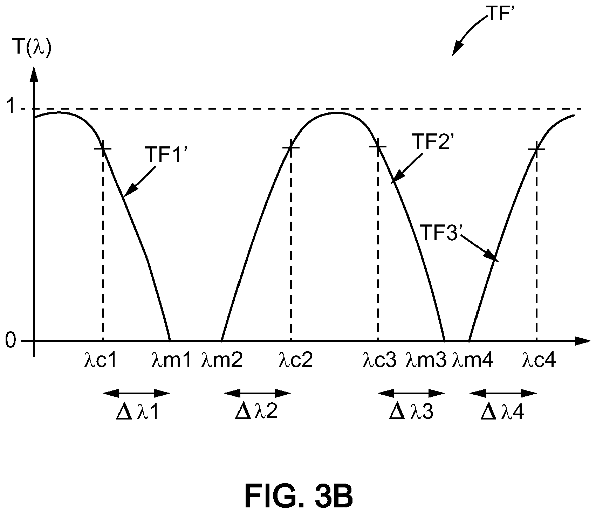

La **figure 3B** illustre plus en détail la fonction de transfert globale TF' correspondant au dispositif de filtrage 10'.

En particulier, les fonctions de transfert TF1'($\lambda$) et TF3'($\lambda$) respectives des unités de filtrage optique 13' et 17' sont similaires aux fonctions de transfert TF1($\lambda$) et TP2($\lambda$) des unités de filtrage optique 13 et 15 déjà discutées en relation avec la figure 2B.

S'ajoute à ces fonctions de transfert la fonction de transfert TF2'($\lambda$) qui présente aussi bien une partie croissante entre la deuxième longueur d'onde d'extinction $\lambda m2$ et la deuxième longueur d'onde de coupure $\lambda c2$ qu'une partie décroissante entre la troisième longueur d'onde de coupure $\lambda c3$ et la troisième longueur d'onde d'extinction $\lambda m3$.

La fonction de transfert globale TF' résulte de la superposition des trois fonctions de transfert TF1', TF2' et TF3' et permet de supprimer les sous-bandes optiques d'un signal qui tombent dans les bandes optiques comprises, d'une part, entre les longueurs d'onde d'extinction $\lambda m1$ et $\lambda m2$ et, d'autre part, entre les longueurs d'onde d'extinction $\lambda m3$ et $\lambda m4$.

Cette fonction de transfert globale est particulièrement avantageuse en ce qu'elle permet la suppression sélective et fine de sous-bandes optiques étroites non voisines dans un multiplex de sous-bandes optiques, ce qui est impossible avec les filtres optiques coupe-bande traditionnels.

Au travers du mode de réalisation décrit sur les figures 3A et 3B, on voit bien que la présente invention peut concerner plus généralement un dispositif de filtrage optique coupe-bande capable de supprimer n bandes optiques (avec n≥1), ce dispositif comprenant alors des moyens de duplication de type coupleur 1:n+1 présentant n+1 ports de sorties connectés respectivement aux entrées de n-1 unités de filtrage optique similaires à l'unité 15', ainsi que d'une unité de filtrage optique similaire à l'unité 13' et d'une unité de filtrage optique similaire à l'unité 17', les sorties de l'ensemble de ces n+1 unités de filtrage optiques étant connectées aux n+1 entrées de moyens de couplage de type coupleur n+1:1, afin de coupler les n+1 signaux filtrés pour obtenir un signal dans lequel n bandes optiques sont supprimées.

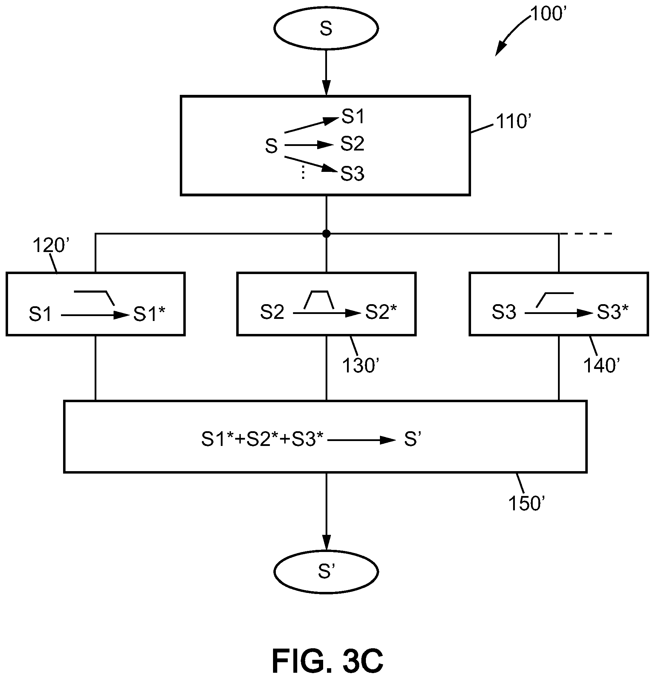

On se réfère maintenant à la **figure 3C** sur laquelle sont illustrées les étapes d'un procédé 100' de filtrage optique coupe-bande d'une première et d'une deuxième bandes optiques dans un signal optique, lequel peut être réalisé au moyen du dispositif 10' décrit ci-avant.

Ce procédé 100' comprend une première étape 110' de duplication du signal optique S en trois signaux optiques dupliqués S1, S2 et S3.

Ce procédé 100' comprend ensuite, d'une part, le filtrage 120' du premier signal optique dupliqué S1 au moyen d'une première unité de filtrage optique passe-bande 13' présentant une fonction de transfert TF1 avec une partie décroissante entre une première longueur d'onde de coupure $\lambda$c1 et une première longueur d'onde d'extinction $\lambda$m1, afin d'obtenir un premier signal filtré S1*.

Parallèlement, ce procédé 100' comprend le filtrage 130' du deuxième signal optique dupliqué S2 au moyen d'une deuxième unité de filtrage optique passe-bande 15' présentant une fonction de transfert TF2 avec d'une part une partie croissante entre une deuxième longueur d'onde d'extinction $\lambda$m2 et une deuxième longueur d'onde de coupure $\lambda$c2, et d'autre part une partie décroissante entre une troisième longueur d'onde de coupure $\lambda$c3, supérieure à la deuxième longueur d'onde de coupure $\lambda$c2, et une troisième longueur d'onde d'extinction $\lambda$m3, afin d'obtenir un deuxième signal filtré S2*.

Parallèlement, le procédé 100 comprend le filtrage 140' du troisième signal optique dupliqué S3 au moyen d'une troisième unité de filtrage optique passe-bande 17' présentant une fonction de transfert TF3 avec une partie croissante entre une quatrième longueur d'onde d'extinction $\lambda$m4 et une quatrième longueur d'onde de coupure $\lambda$c4, afin d'obtenir un troisième signal filtré S3*.

Une fois les trois signaux filtrés S1*, S2* et S3* obtenus, ces trois signaux optiques filtrés sont combinés, lors de l'étape de combinaison (150'), afin d'obtenir un signal optique modifié S' dans lequel les deux bandes optiques comprises respectivement entre les première et deuxième longueurs d'extinction, et les troisième et quatrième longueurs d'extinction, sont supprimées.

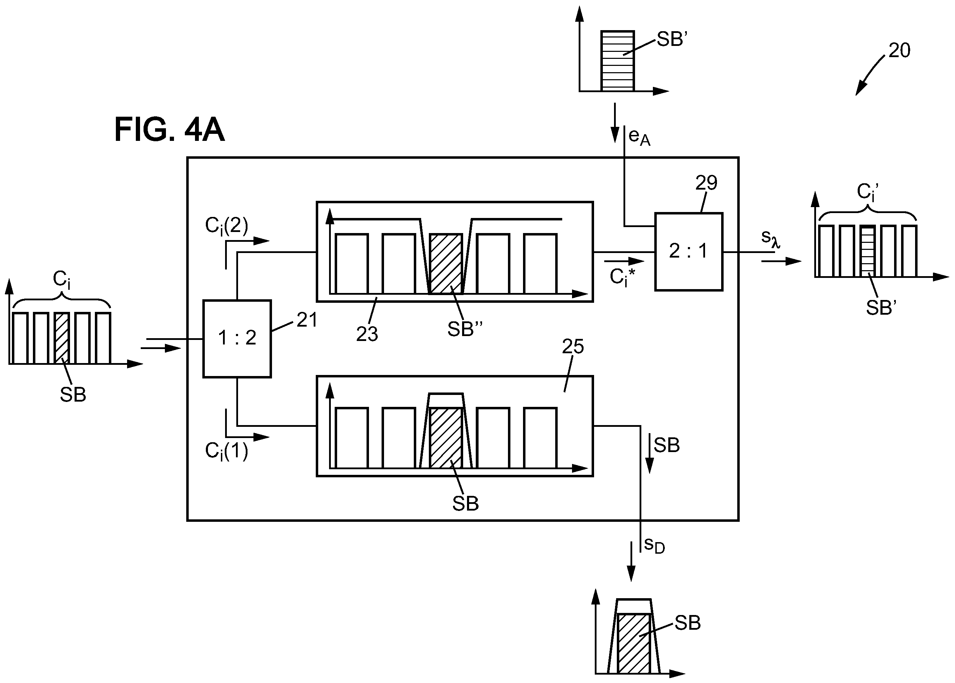

On se réfère à présent à la **figure 4A** qui illustre un dispositif d'insertion/extraction utilisant le dispositif de filtrage optique coupe-bande 10 selon la présente invention.

Un tel dispositif d'insertion/extraction vise, d'une part, à extraire une première sous-bande optique particulière SB au sein d'un signal optique correspondant à un canal optique $C_i$ comprenant un certain nombre de sous-bandes optiques multiplexées en fréquences et, d'autre part, à insérer une sous-bande optique de remplacement SB' en remplacement d'une deuxième sous-bande optique SB" afin d'obtenir un canal optique modifié $C_i$'. Ces deux opérations peuvent être réalisées simultanément, et ce dispositif peut être utilisé avantageusement au sein d'un nœud optique d'un réseau de transmission optique pour extraire et/ou ajouter des données sur des signaux optiques.

Par le terme de « canal optique », on entend ici un signal optique situé substantiellement à une longueur d'onde prédéterminée et pouvant être multiplexé en longueur d'onde avec d'autres canaux optiques similaires pour former un signal multiplexé en longueur d'onde.

Ainsi, dans le contexte de la présente invention, le canal optique $C_i$ considéré est composé d'une pluralité de sous-bandes optiques multiplexées (à titre purement illustratif au nombre de cinq sur la figure 4A, mais il est évident qu'un nombre quelconque de sous-bandes optiques peuvent composer ce canal optique), par exemple en fréquence au moyen de la technologie OFDM.

Parmi ces sous-bandes optiques se trouve donc la première sous-bande optique SB destinée à être extraite ainsi que la deuxième sous-bande optique SB" destinée à être remplacée par la sous-bande optique de remplacement SB' située substantiellement dans la même bande de fréquences, ces première et deuxième sous-bandes optiques SB et SB" pouvant coïncider substantiellement dans le domaine fréquentiel, voire constituer une unique sous-bande optique SB destinée à être à la fois extraite et remplacée par une sous-bande de remplacement SB'.

Le dispositif d'insertion/extraction 20 comprend pour cela des moyens de duplication 21 aptes à dupliquer le signal optique $C_i$ en un premier signal optique dupliqué $C_i(1)$, fourni sur un premier port de sortie, et un deuxième signal optique dupliqué $C_i(2)$, fourni sur un deuxième port de sortie. Ces moyens de duplication peuvent consister en un coupleur 1:2 par exemple.

Le dispositif d'insertion/extraction 20 comprend en outre une unité de filtrage optique passe-bande 25, connectée au premier port de sortie des moyens de duplication 21, et arrangée pour extraire la première sous-bande optique du premier signal optique dupliqué $C_i(1)$ afin de fournir ladite première sous-bande optique SB sur un port de sortie $s_D$ du dispositif 20. Avantageusement, cette unité de filtrage optique passe-bande présente une fonction de transfert au profil essentiellement rectangulaire afin d'optimiser la sélectivité en termes d'extraction de sous-bandes.

Le dispositif d'insertion/extraction 20 comprend par ailleurs un dispositif de filtrage optique coupe-bande 23 similaire au dispositif 10 tel que décrit précédemment, connecté au deuxième port de sortie des moyens de duplication 21, et arrangé pour supprimer la deuxième sous-bande optique SB" dans le deuxième signal optique dupliqué $C_i(2)$ afin d'obtenir un signal optique filtré $C_i^*$ dans lequel cette sous-bande optique SB" n'existe plus.

Dans le cas particulier où la première sous-bande optique SB et la deuxième sous-bande optique SB" coïncident spectralement, le canal optique filtré $C_i^*$ obtenu en sortie du dispositif de filtrage coupe-bande 23 est ainsi complémentaire au signal optique filtré obtenu en sortie de l'unité de filtrage 25, et l'addition de ces deux signaux filtrés correspondent au signal optique d'entrée $C_i$.

Le dispositif d'insertion/extraction 20 comprend également des moyens de couplage 29, dont un des ports d'entrée est connecté à la sortie du dispositif de filtrage optique coupe-bande 23 afin de recevoir le signal optique filtré $C_i^*$. Ces moyens de couplage sont aptes à coupler ce signal optique filtré $C_i^*$ avec un signal optique $e_A$ comprenant une sous-bande optique de remplacement SB', avantageusement comprise dans l'intervalle spectral défini par la deuxième sous-bande optique SB", afin de fournir sur un port de sortie $s_\lambda$ un signal optique modifié $C_i'$ dans lequel la deuxième sous-bande optique SB" est remplacée par la sous-bande optique de remplacement SB'. De tels moyens de couplage 19 peuvent être réalisés sous la forme d'un coupleur 1:2, voire d'un coupleur 55/45.

Pour illustrer simplement le principe de l'invention, le dispositif d'insertion/extraction 20 de la figure 4A est de degré 2, c'est-à-dire qu'il ne permet qu'une seule insertion de sous-bande de remplacement à la fois. Il est cependant tout à fait envisageable de construire un dispositif d'insertion/extraction 20 de degré n, où n>2, auquel cas il faut que le moyen de duplication 21 comporte n ports de duplication auxquels sont connectés respectivement des unités de filtrage coupe-bande similaires au dispositif 23. Chaque signal optique filtré issu de l'un de ces moyens de filtrages coupe-bande peut alors permettre l'insertion d'une sous-bande de remplacement, grâce à un moyen de couplage similaire au moyen de couplage 29.

Similairement, la figure 4A illustre le cas où une seule sous-bande optique SB" est remplacée. Il est cependant tout à fait possible de remplacer un nombre n' de sous-bandes optiques, où n'>1, selon le besoin de désagrégation au niveau du nœud optique où est situé le dispositif d'insertion/extraction 20, auquel cas un dispositif de filtrage optique capable de supprimer n' sous-bandes optiques tel qu'évoqué précédemment doit être employé à la place du dispositif 23.

Si ces n' sous-bandes optiques sont essentiellement contiguës, il est également exemple possible d'employer, pour les moyens de filtrage coupe-bande 23, un unique filtre coupe-bande présentant une fonction de transfert avec une bande spectrale supprimée unique d'une largeur suffisante pour supprimer les n' sous-bandes à remplacer et, pour les moyens de filtrage passe-bande 25, un unique filtre passe-bande présentant une fonction de transfert avec une bande spectrale passante unique d'une largeur suffisante pour extraire les n' sous-bandes optiques.

Dans un mode de réalisation avantageux, la largeur de la bande spectrale rejetée des moyens de filtrage passe-bande 25 et/ou de la bande spectrale rejetée par les moyens de filtrage coupe-bande 23 est ajustable entre une valeur minimale et une valeur maximale, par exemple par l'intermédiaire d'un module de gestion du dispositif (non illustré sur la figure 4A), connecté aux moyens de filtrage passe-bande 25 et aux moyens de filtrage coupe-bande 23.

Dans un premier mode de réalisation, ce module de gestion du dispositif peut être intégré dans le dispositif d'insertion/extraction 20. Cependant, dans un autre mode de réalisation, ce module de gestion du dispositif est positionné à distance de ce dispositif 20 et peut commander une pluralité de dispositifs 20. Dans ce cas, un tel module de gestion du dispositif peut notamment être en charge de la reconfiguration à distance d'un système de transmission combinant les technologies WDM et OFDM et intégrant une pluralité de dispositifs 20 tels que décrits dans la présente demande.

Dans un mode de réalisation particulier, le canal optique $C_i$ est composé de sous-bandes optiques multiplexées orthogonalement en fréquence, par exemple à l'aide de la technologie OFDM. Le principe de la présente invention peut cependant s'appliquer à d'autres types de canaux optiques comprenant des sous-bandes optiques de largeur spectrale étroite, multiplexées au moyen d'une autre technologie.

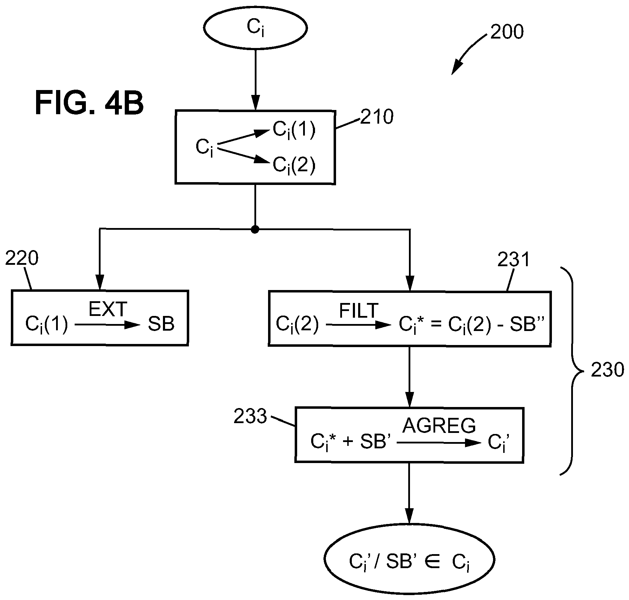

On se réfère maintenant à la **figure 4B** sur laquelle sont illustrées les étapes d'un procédé 230 de remplacement d'au moins une sous-bande optique SB dans un signal optique $C_i$, ainsi que les étapes d'un procédé 200 d'extraction et de remplacement d'au moins une sous-bande optique SB dans un signal optique $C_i$ selon la présente invention.

Le procédé de remplacement 230 comprend une étape 231 de suppression de la sous-bande optique SB du signal optique $C_i$, au moyen du procédé 100 de filtrage optique coupe-bande décrit précédemment, afin d'obtenir un signal filtré $C_i^*$ dans lequel la sous-bande SB est supprimée.

Ce procédé de remplacement comprend en outre une étape 233 d'addition d'une sous-bande optique de remplacement SB', comprise spectralement dans la sous-bande optique SB, au signal optique filtré $C_i^*$, afin d'obtenir un signal optique modifié $C_i'$ dans lequel la sous-bande optique SB est remplacée par la sous-bande optique de remplacement SB'.

Le procédé 200 d'extraction et de remplacement débute, pour sa part, par une étape 210 de duplication du signal optique $C_i$ en au moins deux signaux optiques dupliqués $C_i(1)$ et $C_i(2)$.

Suite à cette duplication, la sous-bande optique SB est extraite (étape 210) du premier signal optique dupliqué $C_i(1)$ au moyen de moyens de filtrage passe-bande similaires aux moyens 25 évoqués précédemment.

Cette sous-bande optique SB est par ailleurs remplacée (étape 230) par une sous-bande optique de remplacement SB' dans le deuxième signal optique dupliqué $C_i(2)$ au moyen du procédé de remplacement 230 décrit ci-avant.

Ces procédés permettent de remplacer et d'extraire une sous-bande optique de faible largeur spectrale, telle qu'une sous-bande optique multiplexée en fréquence, en employant le dispositif de filtrage optique coupe-bande proposé dans la présente invention, et ainsi de bénéficier de sa sélectivité et de son accordabilité accrues.

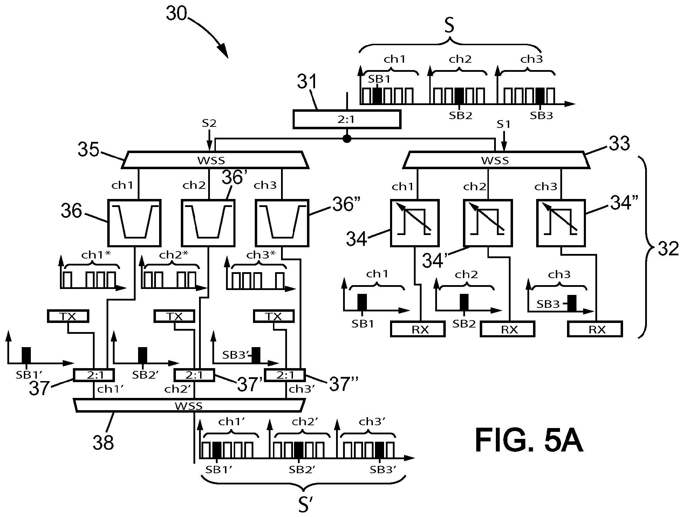

On se réfère maintenant à la **figure 5A** qui illustre un nœud d'insertion/extraction utilisant le dispositif de filtrage optique coupe-bande 10 selon la présente invention, un tel nœud d'insertion/extraction étant capable d'extraire et remplacer au moins une première sous-bande optique SB1 appartenant à un premier canal optique ch1 compris dans un signal optique S comportant lui-même une pluralité de canaux optiques multiplexés en longueur d'onde.

Ce nœud 30 comprend des moyens de duplication 31 aptes à dupliquer le signal optique S en un premier signal optique dupliqué S1 et un deuxième signal optique dupliqué S2.

Le nœud 30 comporte par ailleurs des moyens d'extraction 32 comprenant :

- un premier moyen de démultiplexage de longueur d'onde 33 arrangé pour extraire au moins le premier canal optique ch1 du premier signal optique dupliqué S1 ;
- et au moins un moyen de filtrage optique passe-bande 34 arrangé pour extraire la première sous-bande optique SB1 du premier canal optique ch1 démultiplexé par le moyen 34, afin de fournir en sortie un signal optique extrait comprenant la première sous-bande optique SB1.

Ainsi, dans l'exemple non limitatif illustré en figure 5A, le premier moyen de démultiplexage 33 démultiplexe 3 canaux optiques ch1, ch2 et ch3, envoyés respectivement vers trois moyens de filtrage optique passebande 34, 34' et 34" afin d'extraire les trois sous-bandes optiques respectives SB1, SB2 et SB3. Le nœud 30 comporte en outre :

- un deuxième moyen de démultiplexage de longueur d'onde 35 arrangé pour extraire au moins le premier canal optique ch1 du deuxième signal optique dupliqué S2.
- un premier dispositif de filtrage optique coupe-bande 36 similaire au dispositif 10 décrit ci-avant et arrangé pour supprimer la première sous-bande optique SB1 dans le premier canal optique extrait ch1, afin d'obtenir un premier canal optique filtré ch1*.
- des premiers moyens de couplage 37, aptes à coupler le premier canal optique filtré avec un signal optique comprenant une première sous-bande optique de remplacement SB1' afin de fournir en sortie un premier canal optique modifié ch1' dans lequel la première sous-bande optique SB 1 est remplacée par la première sous-bande optique de remplacement SB1'.

Dans un mode de réalisation particulier où plusieurs sous-bandes optiques sont remplacées, le deuxième moyen de démultiplexage de longueur d'onde 35 est arrangé en outre pour extraire du deuxième signal optique dupliqué S2 un deuxième canal optique ch2 comprenant une deuxième sous-bande optique SB2, et le nœud comprend :

- un deuxième dispositif de filtrage optique coupe-bande 36' similaire au dispositif 10 décrit ci-avant et arrangé pour supprimer la deuxième sous-bande optique (SB2) dans le deuxième canal optique extrait

ch2 afin d'obtenir un deuxième canal optique filtré ch2*.

- des deuxièmes moyens de couplage 37' aptes à coupler le deuxième canal optique filtré avec un signal optique comprenant une deuxième sous-bande optique de remplacement SB2' afin de fournir en sortie un deuxième canal optique modifié ch2' dans lequel la deuxième sous-bande optique SB2 est remplacée par la deuxième sous-bande optique de remplacement SB2'.
- des moyens de multiplexage de longueurs d'onde 38 arrangés pour multiplexer au moins les premier et deuxième canaux optiques modifiés afin d'obtenir un signal optique modifié S' dans lequel les première et deuxième sous-bandes ont été remplacées respectivement par les première et deuxième sous-bandes optiques de remplacement.

Ainsi, dans l'exemple non limitatif illustré en figure 5A, le deuxième moyen de démultiplexage 35 démultiplexe 3 canaux optiques ch1 ,ch2 et ch3, envoyés respectivement vers trois moyens de filtrage optique coupe-bande 36, 36' et 36" permettant d'obtenir respectivement trois canaux filtrés ch1*, ch2* et ch3* dans lesquels les trois sous-bandes optiques respectives SB1, SB2 et SB3 sont supprimées.

Les trois sous-bandes optiques de remplacement SB1', SB2' et SB3' sont additionnées à ces trois canaux filtrés au moyens de trois moyens de couplage 37, 37' et 37" afin d'obtenir trois canaux modifiés ch1', ch2' et ch3' contenant respectivement ces sous-bandes optiques de remplacement SB1', SB2' et SB3'. Ces trois canaux modifiés sont alors multiplexés par les moyens de multiplexage 38 afin d'obtenir un signal S' contenant ces trois canaux optiques modifiés avec leurs sous-bandes optiques de remplacement.

Ces premier et deuxième moyens de démultiplexage 33, 35 ainsi que ces moyens de multiplexage 38 peuvent être de type WSS pour permettre en outre une commutation spatiale. Il est ici souligné que ces WSS gèrent une largeur de bande de 50 GHz (typiquement l'occupation d'un canal OFDM) alors que les filtres coupe-bande 36, 36', 36" assurent la gestion de sous-bandes OFDM dont la largeur typique est de 10 GHz (soit 8 pm).

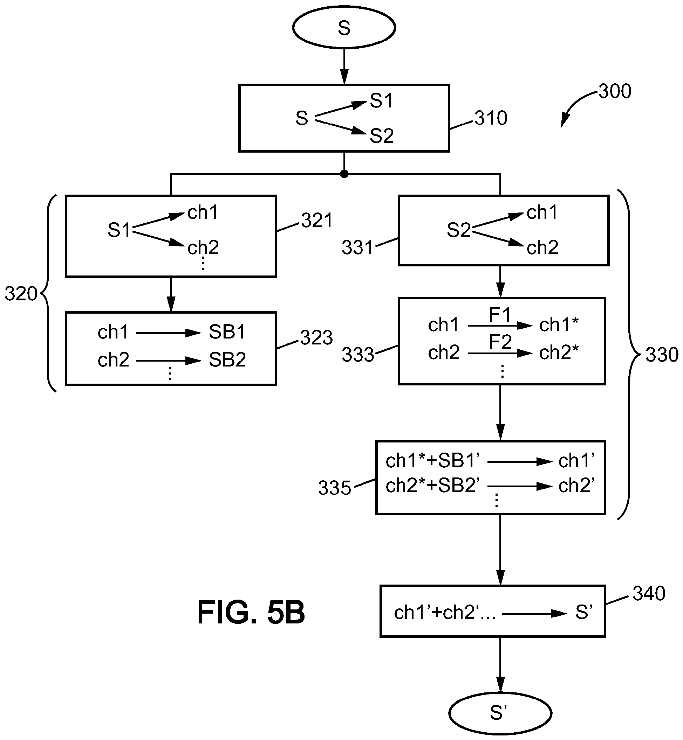

On se réfère maintenant à la **figure 5B** sur laquelle sont illustrées les étapes d'un procédé 330 de remplacement d'au moins une première sous-bande optique SB1 dans un premier canal optique ch1 d'un signal optique S composé d'une pluralité de canaux optiques multiplexés en longueurs d'onde, ainsi que les étapes d'un procédé 300 d'extraction et de remplacement d'au moins une première sous-bande optique SB1 dans un premier canal optique ch1 d'un signal optique S selon la présente invention.

Le procédé de remplacement 330 comprend une étape 331 d'extraction du premier canal optique ch1 à partir du signal optique S.

Ce procédé de remplacement se poursuit alors par une étape 333 de suppression de la première sous-bande optique du signal optique au moyen du procédé 100 de filtrage optique coupe-bande décrit ci-avant, afin d'obtenir un premier canal filtré ch1* dans lequel cette sous-bande optique SB 1 est supprimée.

Une première sous-bande optique de remplacement SB1', comprise spectralement dans la première sous-bande optique SB1, est alors ajoutée (étape 335) au premier canal filtré ch1*, afin d'obtenir un canal optique modifié ch1' dans lequel la première sous-bande optique SB1 est remplacée par la première sous-bande optique de remplacement SB1'.

Le procédé 200 d'extraction et de remplacement débute, pour sa part, par une étape 310 de duplication du signal optique S en au moins deux signaux optiques dupliqués S1 et S2.

S'ensuit, d'une part, une étape 320 d'extraction de la première sous-bande optique SB1 à partir du premier signal optique dupliqué S1, au moyen de moyens de démultiplexage et de moyens de filtrage passe-bande.

Cette étape d'extraction comprend notamment une sous-étape 321 de démultiplexage du signal dupliqué S1 afin d'extraire au moins le premier canal optique ch1 de ce signal, ainsi qu'une étape 323 de filtrage passe-bande visant à extraire la première sous-bande optique SB1 de ce premier canal optique ch1.

Le procédé 200 comprend par ailleurs une étape 330 de remplacement au moins de la première sous-bande optique SB1, par une première sous-bande optique de remplacement SB1', dans le premier canal optique ch1 du deuxième signal optique dupliqué S2, au moyen du procédé 330 de remplacement décrit ci-avant, afin d'obtenir un canal optique modifié ch1'.

Dans un mode de réalisation particulier où plusieurs canaux optiques modifiés ch1', ch2',etc. sont obtenus lors de cette étape de remplacement, le procédé 300 se poursuit alors par une étape 340 de multiplexage visant à rassembler les canaux optiques modifiés au sein d'un même signal optique S' comprenant une pluralité de canaux modifiés multiplexés en longueur d'onde, chaque canal modifié présentant une sous-bande de remplacement.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

## Revendications

**1.** Dispositif de filtrage optique coupe-bande (10) comprenant :

des moyens de duplication (11) aptes à dupliquer un signal optique sur au moins un premier et un deuxième port de sortie ;

une première unité de filtrage optique (13), connectée au premier port de sortie des moyens de duplication, présentant une fonction de transfert (TF1) avec une partie décroissante entre une première longueur d'onde de coupure ($\lambda$c1) et une première longueur d'onde d'extinction ($\lambda$m1);

une deuxième unité de filtrage optique (15), connectée au deuxième port de sortie des moyens de duplication, présentant une fonction de transfert (TF2) avec une partie croissante entre une deuxième longueur d'onde d'extinction ($\lambda$m2) et une deuxième longueur d'onde de coupure ($\lambda$c2), la deuxième longueur d'onde d'extinction étant supérieure à la première longueur d'onde d'extinction ; et

des moyens de couplage (19), connectés aux première et deuxième unités de filtrage optique et arrangés pour combiner les signaux optiques filtrés par lesdites unités de filtrage optique afin d'obtenir un signal optique filtré dans lequel la bande optique comprise entre la première et deuxième longueurs d'onde d'extinction est supprimée.

**2.** Dispositif de filtrage selon la revendication 1, **caractérisé en ce que** les première et deuxième unités de filtrage comprennent un filtre passe-bande optique présentant un profil essentiellement rectangulaire dans lequel le taux d'extinction entre la première longueur d'onde de coupure et la première longueur d'onde d'extinction, et entre la deuxième longueur d'onde de coupure et la deuxième longueur d'onde d'extinction, est d'au moins 30 dB.

**3.** Dispositif de filtrage selon la revendication 1 ou 2, **caractérisé en ce que** l'écart spectral ($\Delta\lambda_{SB}$) entre la première et la deuxième longueur d'onde d'extinction est inférieur ou égal à 10 GHz

**4.** Dispositif de filtrage selon l'une des revendications 1 à 3, **caractérisé en ce que** l'écart spectral ($\Delta\lambda$1) entre la première longueur d'onde de coupure et la première longueur d'onde d'extinction et/ou l'écart spectral ($\Delta\lambda$2) entre la deuxième longueur d'onde de coupure et la deuxième longueur d'onde d'extinction est inférieur ou égal à 5 GHz.

**5.** Dispositif de filtrage optique coupe-bande selon l'une des revendications 1 à 4, **caractérisé en ce que** :

les moyens de duplication (11') sont aptes en outre à dupliquer le signal optique sur un troisième port de sortie ;
la fonction de transfert (TF2') de la deuxième unité de filtrage optique (15') présente en outre une partie décroissante entre une troisième longueur d'onde de coupure (λc3), supérieure à la deuxième longueur d'onde de coupure, et une troisième longueur d'onde d'extinction (λm3) ; et le dispositif comprend une troisième unité de filtrage optique (17'), connectée au troisième port de sortie des moyens de duplication, présentant une fonction de transfert (TF3') avec une partie croissante entre une quatrième longueur d'onde d'extinction (λm4) et une quatrième longueur d'onde de coupure (λc4), la quatrième longueur d'onde d'extinction étant supérieure à la troisième longueur d'onde d'extinction ; et les moyens de couplage (19') sont connectés en outre à la troisième unité de filtrage et arrangés pour combiner les signaux optiques filtrés par lesdites unités de filtrage optique afin d'obtenir un signal optique filtré dans lequel, en outre, la bande optique comprise entre les troisième et quatrième longueurs d'onde d'extinction est supprimée.

6. Utilisation d'un dispositif de filtrage optique coupe-bande selon l'une des revendications 1 à 5 afin de filtrer au moins une sous-bande optique d'un signal optique comprenant une pluralité de sous-bandes optiques multiplexées en fréquence.

7. Dispositif optique d'insertion/extraction (20) comprenant :

des moyens de duplication (21) aptes à dupliquer un signal optique (Ci) en un premier signal optique dupliqué (Ci(1)) et un deuxième signal optique dupliqué (Ci(2)) ;
une unité de filtrage optique passe-bande (25) arrangée pour extraire une première sous-bande optique (SB) du premier signal optique dupliqué afin de fournir ladite première sous-bande optique en sortie du dispositif;
un dispositif de filtrage optique coupe-bande (23) selon l'une des revendications 1 à 5, arrangé pour supprimer une deuxième sous-bande optique (SB") dans le deuxième signal optique dupliqué ; et
des moyens de couplage (29) aptes à coupler le signal optique filtré par le dispositif de filtrage optique coupe-bande (Ci*) avec un signal optique comprenant une sous-bande optique de remplacement (SB') comprise dans l'intervalle spectral défini par la deuxième sous-bande optique, afin de fournir en sortie un signal optique modifié (Ci') dans lequel la deuxième sous-bande optique (SB") est remplacée par la sous-bande optique de remplacement (SB').

8. Nœud optique d'insertion/extraction (30) d'au moins une première sous-bande optique (SB1) appartenant à un premier canal optique (ch1) compris dans un signal optique (S) comportant une pluralité de canaux optiques multiplexés en longueur d'onde, ledit nœud optique comprenant :

des moyens de duplication (31) aptes à dupliquer le signal optique en un premier signal optique dupliqué (S1) et un deuxième signal optique dupliqué (S2);
des moyens d'extraction (32) comprenant un premier moyen de démultiplexage de longueur d'onde (33) arrangé pour extraire au moins le premier canal optique (ch1) du premier signal optique dupliqué (S1) et au moins un moyen de filtrage optique passe-bande (34) arrangé pour extraire la première sous-bande optique (SB1) du premier canal optique (ch1) extrait, afin de fournir en sortie un signal optique comprenant la première sous-bande optique ;
un deuxième moyen de démultiplexage de longueur d'onde (35) arrangé pour extraire au moins le premier canal optique (ch1) du deuxième signal optique dupliqué (S2) ;
un premier dispositif de filtrage optique coupe-bande (36) selon l'une des revendications 1 à 4, arrangé pour supprimer la première sous-bande optique (SB1) dans le premier canal optique extrait (ch1) afin d'obtenir un premier canal optique filtré (ch1*) ; et
des premiers moyens de couplage (37) aptes à coupler le premier canal optique filtré avec un signal optique comprenant une première sous-bande optique de remplacement (SB1') afin de fournir en sortie un premier canal optique modifié (ch1') dans lequel la première sous-bande optique (SB1) est remplacée par la première sous-bande optique de remplacement (SB1').

9. Nœud optique d'insertion/extraction selon la revendication 8, **caractérisé en ce que** le deuxième moyen de démultiplexage de longueur d'onde (35) est arrangé en outre pour extraire du deuxième signal optique dupliqué (S2) un deuxième canal optique (ch2) comprenant une deuxième sous-bande optique (SB2), et **en ce que** le nœud comprend :

un deuxième dispositif de filtrage optique coupe-bande (36') selon l'une des revendications 1 à 4, arrangé pour supprimer la deuxième sous-bande optique (SB2) dans le deuxième canal optique extrait (ch2) afin d'obtenir un deuxième canal optique filtré (ch2*);
des deuxièmes moyens de couplage (37') aptes à coupler le deuxième canal optique filtré avec un signal optique comprenant une deuxième sous-bande optique de remplacement (SB2') afin de fournir en sortie un deuxième canal optique modifié (ch2') dans lequel la deuxième sous-bande optique (SB2) est remplacée par la deuxième sous-bande optique de remplacement (SB2') ; et

des moyens de multiplexage de longueurs d'onde (38) arrangés pour multiplexer au moins les premier et deuxième canaux optique modifiés afin d'obtenir un signal optique modifié (S') dans lequel les première et deuxième sous-bandes ont été remplacées respectivement par les première et deuxième sous-bande optique de remplacement.

10. Procédé de filtrage optique coupe-bande d'au moins une première bande optique dans un signal optique, le procédé comprenant :

la duplication (110) du signal optique (S) en au moins deux signaux optiques dupliqués ;
le filtrage (120) du premier signal optique dupliqué au moyen d'une première unité de filtrage optique passe-bande présentant une fonction de transfert (TF1) avec une partie décroissante entre une première longueur d'onde de coupure ($\lambda c1$) et une première longueur d'onde d'extinction ($\lambda m1$) ;
le filtrage (130) du deuxième signal optique dupliqué au moyen d'une deuxième unité de filtrage optique passe-bande présentant une fonction de transfert (TF2) avec une partie croissante entre une deuxième longueur d'onde d'extinction ($\lambda m2$) et une deuxième longueur d'onde de coupure ($\lambda c2$) ; et
la combinaison (150) des deux signaux optiques filtrés d'obtenir un signal optique filtré dans lequel la bande optique comprise entre les première et deuxième longueurs d'onde d'extinction est supprimée.

11. Procédé de filtrage optique coupe-bande selon la revendication 10, **caractérisé en ce que** :

le signal optique (S) est dupliqué en trois signaux optiques dupliqués lors de l'étape de duplication (110) ;
la fonction de transfert (TF2) de la deuxième unité de filtrage optique coupe-bande présente en outre une partie décroissante entre une troisième longueur d'onde de coupure ($\lambda c3$), supérieure à la deuxième longueur d'onde de coupure, et une troisième longueur d'onde d'extinction ($\lambda m3$) ;
le procédé comprend en outre le filtrage (140) du troisième signal optique dupliqué au moyen d'une troisième unité de filtrage optique passe-bande présentant une fonction de transfert (TF3) avec une partie croissante entre une quatrième longueur d'onde d'extinction ($\lambda m4$) et une quatrième longueur d'onde de coupure ($\lambda c4$) ; et
les trois signaux optiques filtrés sont combinés, lors de l'étape de combinaison (150), afin d'obtenir un signal optique filtré dans lequel, en outre, la bande optique comprise entre les troisième et quatrième longueurs d'onde d'extinction est supprimée.

12. Procédé de remplacement (230) d'au moins une première sous-bande optique (SB) dans un signal optique ($C_i$), le procédé comprenant :

la suppression (231) de la première sous-bande optique du signal optique au moyen du procédé de filtrage optique coupe-bande selon la revendication 10 afin d'obtenir un signal filtré ($C_i^*$); et
l'addition (233) d'une sous-bande optique de remplacement (SB') comprise spectralement dans la première sous-bande optique (SB) au signal optique filtré afin d'obtenir un signal optique modifié ($C_i'$) dans lequel la première sous-bande optique est remplacée par la sous-bande optique de remplacement.

13. Procédé d'extraction et de remplacement d'au moins une première sous-bande optique (SB") dans un signal optique ($C_i$), le procédé comprenant :

la duplication (210) du signal optique ($C_i$) en au moins deux signaux optiques dupliqués ($C_i(1)$, $C_i(2)$);
l'extraction (220) de la première sous-bande optique à partir du premier signal optique dupliqué au moyen de moyens de filtrage passe-bande ; et
le remplacement (230) de la première sous-bande optique par une sous-bande optique de remplacement dans le deuxième signal optique dupliqué au moyen du procédé de remplacement selon la revendication 12.

14. Procédé de remplacement (330) d'au moins une première sous-bande optique (SB) dans un premier canal optique (ch1) d'un signal optique (S) composée d'une pluralité de canaux optiques multiplexés en longueurs d'onde, le procédé comprenant :

l'extraction (331) du premier canal optique (ch1) à partir du signal optique (S) ;
la suppression (333) de la première sous-bande optique du signal optique au moyen du procédé de filtrage optique coupe-bande selon la revendication 10, afin d'obtenir un premier canal filtré (ch1*); et
l'addition (335) d'une première sous-bande optique de remplacement (SB1') comprise spectralement dans la première sous-bande optique (SB1) au premier canal filtré afin d'obtenir un canal optique modifié (ch1') dans lequel la première sous-bande optique est remplacée par la première sous-bande optique de remplacement.

15. Procédé d'extraction et de remplacement d'au moins une première sous-bande optique (SB) dans un premier canal optique (ch1) d'un signal optique (S) composée d'une pluralité de canaux optiques multiplexés en longueurs d'onde, le procédé comprenant :

la duplication (310) du signal optique (S) en au moins deux signaux optiques dupliqués (S1, S2) ;

l'extraction (320) de la première sous-bande optique à partir du premier signal optique dupliqué (S1) au moyen de moyens de démultiplexage et de moyens de filtrage passe-bande ; et

le remplacement (330) de la première sous-bande optique par une sous-bande optique de remplacement dans le premier canal optique (ch1) du deuxième signal optique dupliqué (S2) au moyen du procédé de remplacement selon la revendication 14.

**Patentansprüche**

1. Optische Bandsperrfiltervorrichtung (10), umfassend:

Duplikationseinrichtungen (11), die geeignet sind, ein optisches Signal auf mindestens einen ersten und einen zweiten Ausgangsport zu duplizieren;

eine erste optische Filtereinheit (13), die an den ersten Ausgangsport der Duplikationseinrichtungen angeschlossen ist und eine Übertragungsfunktion (TF) mit einem fallenden Teil zwischen einer ersten Grenzwellenlänge ($\lambda$c1) und einer ersten Extinktionswellenlänge ($\lambda$m1) aufweist;

eine zweite optische Filtereinheit (15), die an den zweiten Ausgangsport der Duplikationseinrichtungen angeschlossen ist und eine Übertragungsfunktion (TF2) mit einem steigenden Teil zwischen einer zweiten Extinktionswellenlänge ($\lambda$m2) und einer zweiten Grenzwellenlänge ($\lambda$c2) aufweist, wobei die zweite Extinktionswellenlänge größer als die erste Extinktionswellenlänge ist; und

Kopplungseinrichtungen (19), die an die erste und die zweite Filtereinheit angeschlossen sind und dazu eingerichtet sind, die von den optischen Filtereinheiten gefilterten optischen Signale zu kombinieren, um ein gefiltertes optisches Signal zu erhalten, in dem das optische Band zwischen der ersten und der zweiten Extinktionswellenlänge unterdrückt ist.

2. Filtervorrichtung nach Anspruch 1, **dadurch gekennzeichnet, dass** die erste und die zweite Filtereinheit einen optischen Bandpassfilter umfassen, der ein im Wesentlichen rechteckiges Profil aufweist, in dem der Extinktionsanteil zwischen der ersten Grenzwellenlänge und der ersten Extinktionswellenlänge und zwischen der zweiten Grenzwellenlänge und der zweiten Extinktionswellenlänge mindestens 30 dB beträgt.

3. Filtervorrichtung nach Anspruch 1 oder 2, **dadurch gekennzeichnet, dass** die Spektraldifferenz ($\Delta\lambda_{SB}$) zwischen der ersten und der zweiten Extinktionswellenlänge kleiner oder gleich 10 GHz ist.

4. Filtervorrichtung nach einem der Ansprüche 1 bis 3, **dadurch gekennzeichnet, dass** die Spektraldifferenz ($\Delta\lambda1$) zwischen der ersten Grenzwellenlänge und der ersten Extinktionswellenlänge und/oder die Spektraldifferenz ($\Delta\lambda2$) zwischen der zweiten Grenzwellenlänge und der zweiten Extinktionswellenlänge kleiner oder gleich 5 GHz ist.

5. Optische Bandsperrfiltervorrichtung nach einem der Ansprüche 1 bis 4, **dadurch gekennzeichnet dass**:

die Duplikationseinrichtungen (11') ferner geeignet sind, das optische Signal auf einen dritten Ausgangsport zu duplizieren;

die Übertragungsfunktion (TF2') der zweiten optischen Filtereinheit (15') ferner einen fallenden Teil zwischen einer dritten Grenzwellenlänge ($\lambda$c3), die größer als die zweite Grenzwellenlänge ist, und einer dritten Extinktionswellenlänge ($\lambda$m3) aufweist; und

die Vorrichtung eine dritte optische Filtereinheit (17') umfasst, die an den dritten Ausgangsport der Duplikationseinrichtungen angeschlossen ist und eine Übertragungsfunktion (TF3') mit einem steigenden Teil zwischen einer vierten Extinktionswellenlänge ($\lambda$m4) und einer vierten Grenzwellenlänge ($\lambda$c4) aufweist, wobei die vierte Extinktionswellenlänge größer als die dritte Extinktionswellenlänge ist; und

die Kopplungseinrichtungen (19') ferner an die dritte Filtereinheit angeschlossen sind und dazu eingerichtet sind, die von den optischen Filtereinheiten gefilterten optischen Signale zu kombinieren, um ein gefiltertes optisches Signal zu erhalten, in dem ferner das optische Band zwischen der dritten und der vierten Extinktionswellenlänge unterdrückt ist.

6. Verwendung einer optischen Bandsperrfiltervorrichtung nach einem der Ansprüche 1 bis 5, um mindestens ein optisches Subband eines optischen Signals zu filtern, das eine Mehrzahl von frequenzgemultiplexten optischen Subbändern umfasst.

7. Optische Einkoppel/Auskoppel-Vorrichtung (20), umfassend:

Duplikationseinrichtungen (21), die geeignet sind, ein optisches Signal ($C_i$) zu einem duplizierten ersten optischen Signal ($C_i(1)$) und einem duplizierten zweiten optischen Signal ($C_i(2)$) zu duplizieren;
eine optische Bandpassfiltereinheit (25), die dazu eingerichtet ist, ein erstes optisches Subband (SB) aus dem duplizierten ersten optischen Signal auszukoppeln, um das erste optische Subband im Ausgang der Vorrichtung bereitzustellen;
eine optische Bandsperrfiltervorrichtung (23) nach einem der Ansprüche 1 bis 5, die dazu eingerichtet ist, ein zweites optisches Subband (SB") in dem duplizierten zweiten optischen Signal zu unterdrücken; und
Kopplungseinrichtungen (29), die geeignet sind, das von der optischen Bandsperrfiltervorrichtung ($C_i^*$) gefilterte optische Signal mit einem optischen Signal zu koppeln, das ein optisches Ersatz-Subband (SB') umfasst, das in dem durch das zweite optische Subband definierten Spektralintervall enthalten ist, um im Ausgang ein modifiziertes optisches Signal ($C_i'$) bereitzustellen, in dem das zweite optische Subband (SB") durch das optische Ersatz-Subband (SB') ersetzt ist.

8. Optischer Einkoppel/Auskoppel-Knoten (30) zum Einkoppeln/Auskoppeln mindestens eines ersten optischen Subbandes (SB1), das einem ersten optischen Kanal (ch1) angehört, der in einem optischen Signal (S) enthalten ist, das eine Mehrzahl von wellenlängengemultiplexten optischen Kanälen beinhaltet, wobei der optische Knoten umfasst:

Duplikationseinrichtungen (31), die geeignet sind, ein optisches Signal zu einem duplizierten ersten optischen Signal(S1) und einem duplizierten zweiten optischen Signal(S2) zu duplizieren;
Auskoppeleinrichtungen (32), umfassend eine erste Wellenlängendemultiplexeinrichtung (33), die dazu eingerichtet ist, mindestens den ersten optischen Kanal (ch1) aus dem duplizierten ersten optischen Signal (S1) auszukoppeln, und mindestens eine optische Bandpassfiltereinrichtung (34), die dazu eingerichtet ist, das erste optische Subband (SB1) aus dem ausgekoppelten ersten optischen Kanal (ch1) auszukoppeln, um im Ausgang ein optisches Signal bereitzustellen, welches das erste optische Subband umfasst;
eine zweite Wellenlängendemultiplexeinrichtung (35), die dazu eingerichtet ist, mindestens den ersten optischen Kanal (ch1) aus dem duplizierten zweiten optischen Signal (S2) auszukoppeln;
eine erste optische Bandsperrfiltervorrichtung (36) nach einem der Ansprüche 1 bis 4, die dazu eingerichtet ist, das erste optische Subband (SB1) in dem ausgekoppelten ersten optischen Kanal (ch1) zu unterdrücken, um einen gefilterten ersten optischen Kanal (ch1*) zu erhalten; und
erste Koppeleinrichtungen (37), die geeignet sind, den gefilterten ersten optischen Kanal mit einem optischen Signal zu koppeln, das ein erstes optisches Ersatz-Subband (SB1') umfasst, um im Ausgang einen modifizierten ersten optischen Kanal (ch1') bereitzustellen, in dem das erste optische Subband (SB1) durch das erste optische Ersatz-Subband (SB1') ersetzt ist.

9. Optischer Einkoppel/Auskoppel-Knoten nach Anspruch 8, **dadurch gekennzeichnet, dass** die zweite Wellenlängendemultiplexeinrichtung (35) ferner dazu eingerichtet ist, aus dem duplizierten zweiten optischen Signal (S2) einen zweiten optischen Kanal (ch2) auszukoppeln, der ein zweites optisches Subband (SB2) umfasst, und dass der Knoten umfasst:

eine zweite optische Bandsperrfiltervorrichtung (36') nach einem der Ansprüche 1 bis 4, die dazu eingerichtet ist, das zweite optische Subband (SB2) in dem ausgekoppelten zweiten optischen Kanal (ch2) zu unterdrücken, um einen gefilterten zweiten optischen Kanal (ch2*) zu erhalten;
zweite Kopplungseinrichtungen (37'), die geeignet sind, den gefilterten zweiten optischen Signal mit einem optischen Signal zu koppeln, das ein zweites optisches Ersatz-Subband (SB1') umfasst, um im Ausgang einen modifizierten zweiten optischen Kanal (ch2') bereitzustellen, in dem das zweite optische Subband (SB2) durch das zweite optische Ersatz-Subband (SB2') ersetzt ist; und
Wellenlängenmultiplexeinrichtungen (38), die dazu eingerichtet sind, mindestens den ersten und den zweiten modifizierten optischen Kanal zu multiplexen, um ein modifiziertes optisches Signal (S') zu erhalten, in dem das erste und das zweite Subband jeweils durch das erste und das zweite optische Ersatz-Subband ersetzt worden sind.

10. Verfahren zur optischen Bandsperrfilterung mindestens eines ersten optischen Bandes in einem optischen Signal, wobei das Verfahren umfasst:

das Duplizieren (110) des optischen Signals (S) zu mindestens zwei duplizierten optischen Signalen;

das Filtern (120) des duplizierten ersten optischen Signals mittels einer ersten optischen Bandpassfiltereinheit, die eine Übertragungsfunktion (TF1) mit einem fallenden Teil zwischen einer ersten Grenzwellenlänge ($\lambda$c1) und einer ersten Extinktionswellenlänge ($\lambda$m1) aufweist;

das Filtern (130) des duplizierten zweiten optischen Signals mittels einer zweiten optischen Bandpassfiltereinheit, die eine Übertragungsfunktion (TF2) mit einem steigenden Teil zwischen einer zweiten Extinktionswellenlänge ($\lambda$m2) und einer zweiten Grenzwellenlänge ($\lambda$c2) aufweist; und

das Kombinieren (150) der beiden gefilterten optischen Signale, um ein gefiltertes optisches Signal zu erhalten, in dem das optische Band zwischen der ersten und der zweiten Extinktionswellenlänge unterdrückt ist.

11. Verfahren zur optischen Bandsperrfilterung nach Anspruch 10, **dadurch gekennzeichnet dass**:

das optische Signal (S) beim Duplikationsschritt (110) zu drei duplizierten optischen Signalen dupliziert wird;

die Übertragungsfunktion (TF2) der zweiten optischen Bandsperrfiltereinheit ferner einen fallenden Teil zwischen einer dritten Grenzwellenlänge ($\lambda$c3), die größer als die zweite Grenzwellenlänge ist, und einer dritten Extinktionswellenlänge ($\lambda$m3) aufweist;

das Verfahren ferner das Filtern (140) des duplizierten dritten optischen Signals mittels einer dritten optischen Bandpassfiltereinheit umfasst, die eine Übertragungsfunktion (TF3) mit einem steigenden Teil zwischen einer vierten Extinktionswellenlänge ($\lambda$m4) und einer vierten Grenzwellenlänge ($\lambda$c4) aufweist; und

die gefilterten drei optischen Signale beim Kombinationsschritt (150) kombiniert werden, um ein gefiltertes optisches Signal zu erhalten, in dem ferner das optische Band zwischen der dritten und der vierten Extinktionswellenlänge unterdrückt ist.

12. Verfahren zum Ersetzen (230) mindestens eines ersten optischen Subbandes (SB) in einem optischen Signal ($C_i$), wobei das Verfahren umfasst:

das Unterdrücken (231) des ersten optischen Subbandes des optischen Signals mittels des Verfahrens zur optischen Bandsperrfilterung nach Anspruch 10, um ein gefiltertes Signal ($C_i$*) zu erhalten; und

das Hinzufügen (233) eines optischen Ersatz-Subbandes (SB'), das spektral in dem ersten optischen Subband (SB) enthalten ist, zu dem gefilterten optischen Signal, um ein modifiziertes optisches Signal ($C_i$') zu erhalten, in dem das erste optische Subband durch das optische Ersatz-Subband ersetzt ist.

13. Verfahren zum Auskoppeln und Ersetzen mindestens eines ersten optischen Subbandes (SB") in einem optischen Signal ($C_i$), wobei das Verfahren umfasst:

das Duplizieren (210) des optischen Signals ($C_i$) zu mindesten zwei duplizierten optischen Signalen ($C_i$(1), $C_i$(2)) ;

das Auskoppeln (220) des ersten optischen Subbandes aus dem duplizierten ersten optischen Signal mittels von Bandpassfiltereinrichtungen; und

das Ersetzen (230) des ersten optischen Subbandes durch ein optisches Ersatz-Subband in dem duplizierten zweiten optischen Signal mittels des Ersetzungsverfahrens nach Anspruch 12.

14. Verfahren zum Ersetzen (330) mindestens eines ersten optischen Subbandes (SB) in einem ersten optischen Kanal (ch1) eines optischen Signals (S), das aus einer Mehrzahl von wellenlängengemultiplexten optischen Kanälen besteht, wobei das Verfahren umfasst:

das Auskoppeln (331) des ersten optischen Kanals (ch1) aus dem optischen Signal (S);

das Unterdrücken (333) des ersten optischen Subbandes des optischen Signals mittels des Verfahrens zur optischen Bandsperrfilterung nach Anspruch 10, um einen gefilterten ersten Kanal (ch1*) zu erhalten; und

das Hinzufügen (335) eines ersten optischen Ersatz-Subbandes (SB1'), das spektral im ersten optischen Subband (SB) enthalten ist, zu dem gefilterten ersten Kanal, um einen modifizierten optischen Kanal (ch1') zu erhalten, in dem das erste optische Subband durch das erste optische Ersatz-Subband ersetzt ist.

15. Verfahren zum Auskoppeln und Ersetzen mindestens eines ersten optischen Subbandes (SB) in einem ersten optischen Kanal (ch1) eines optischen Signals (S), das aus einer Mehrzahl von wellenlängengemultiplexten optischen Kanälen besteht, wobei das Verfahren umfasst:

das Duplizieren (310) des optischen Signals (S) zu mindesten zwei duplizierten optischen Signalen (S1, S2) ;

das Auskoppeln (320) des ersten optischen Subbandes aus dem duplizierten ersten optischen Signal (S1) mittels von Demultiplexeinrichtungen und Bandpassfiltereinrichtungen; und

das Ersetzen (330) des ersten optischen Subbandes durch ein optisches Ersatz-Subband in dem ersten optischen Kanal (ch1) des duplizierten zweiten optischen Signals (S2) mittels des Ersetzungsverfahrens nach Anspruch 14.

**Claims**

1. Bandstop optical filtering device (10) comprising:

    duplicating means (11) that are able to provide a duplicate of an optical signal to at least a first and a second output port;
    a first optical filtering unit (13), which is connected to the first output port of the duplicating means, and which has a transfer function (TF1) with a portion that decreases between a first passband-edge wavelength ($\lambda$c1) and a first stopband-edge wavelength ($\lambda$m1\$) ;
    a second optical filtering unit (15), which is connected to the second output port of the duplicating means, and which has a transfer function (TF2) with a portion that increases between a second stopband-edge wavelength ($\lambda$m2) and a second passband-edge wavelength ($\lambda$c2), the second stopband-edge wavelength being longer than the first stopband-edge wavelength; and
    coupling means (19), which are connected to the first and second optical filtering units and arranged to combine the optical signals filtered by said optical filtering units in order to obtain a filtered optical signal from which the optical band comprised between the first and second stopband-edge wavelengths has been removed.

2. Filtering device according to Claim 1, **characterized in that** the first and second filtering units comprise an optical bandpass filter having an essentially rectangular profile in which the attenuation between the first passband-edge wavelength and the first stopband-edge wavelength, and between the second passband-edge wavelength and the second stopband-edge wavelength, is at least 30 dB.

3. Filtering device according to Claim 1 or 2, **characterized in that** the spectral difference ($\Delta\lambda_{SB}$) between the first and second stopband-edge wavelength is smaller than or equal to 10 GHz.

4. Filtering device according to one of Claims 1 to 3, **characterized in that** the spectral difference ($\Delta\lambda$1) between the first passband-edge wavelength and the first stopband-edge wavelength and/or the spectral difference ($\Delta\lambda$2) between the second passband-edge wavelength and the second stopband-edge wavelength is smaller than or equal to 5 GHz.

5. Bandstop optical filtering device according to one of Claims 1 to 4, **characterized in that**:

    the duplicating means (11') are furthermore able to provide a duplicate of the optical signal to a third output port;
    the transfer function (TF2') of the second optical filtering unit (15') furthermore has a portion that decreases between a third passband-edge wavelength ($\lambda$c3), longer than the second passband-edge wavelength, and a third stopband-edge wavelength ($\lambda$m3); and
    the device comprises a third optical filtering unit (17'), which is connected to the third output port of the duplicating means, and which has a transfer function (TF3') with a portion that increases between a fourth stopband-edge wavelength ($\lambda$m4) and a fourth passband-edge wavelength ($\lambda$c4), the fourth stopband-edge wavelength being longer than the third stopband-edge wavelength; and
    the coupling means (19') are furthermore connected to the third filtering unit and arranged to combine the optical signals filtered by said optical filtering units in order to obtain a filtered optical signal from which, furthermore, the optical band comprised between the third and fourth stopband-edge wavelengths has been removed.

6. Use of a bandstop optical filtering device according to one of Claims 1 to 5 in order to filter at least one optical sub-band of an optical signal comprising a plurality of frequency-multiplex optical sub-bands.

7. Inserting/extracting optical device (20) comprising:

    duplicating means (21) that are able to duplicate an optical signal ($C_i$) into a first duplicated optical signal ($C_i(1)$) and a second duplicated optical signal ($C_i(2)$);
    a bandpass optical filtering unit (25) that is arranged to extract a first optical sub-band (SB) from the first duplicated optical signal in order to deliver said first optical sub-band as output of the device;
    a bandstop optical filtering device (23) according to one of Claims 1 to 5, arranged to remove a second optical sub-band (SB") from the second duplicated optical signal; and
    coupling means (29) that are able to couple the optical signal ($C_i^*$) filtered by the bandstop optical filtering device to an optical signal comprising a replacement optical sub-band (SB') comprised in the spectral interval defined by the second optical sub-band, in order to deliver as output a

modified optical signal ($C_i'$) in which the second optical sub-band (SB") has been replaced by the replacement optical sub-band (SB').

8. Optical node (30) for inserting/extracting at least one first optical sub-band (SB1) belonging to a first optical channel (ch1) comprised in an optical signal (S) including a plurality of wavelength-multiplexed optical channels, said optical node comprising:

duplicating means (31) that are able to duplicate the optical signal into a first duplicated optical signal (S1) and a second duplicated optical signal (S2);

extracting means (32) comprising a first wavelength-demultiplexing means (33) that is arranged to extract at least the first optical channel (ch1) from the first duplicated optical signal (S1) and at least one bandpass optical filtering means (34) that is arranged to extract the first optical sub-band (SB1) from the extracted first optical channel (ch1), in order to deliver as output an optical signal comprising the first optical sub-band;

a second wavelength-demultiplexing means (35) that is arranged to extract at least the first optical channel (ch1) from the second duplicated optical signal (S2);

a first bandstop optical filtering device (36) according to one of Claims 1 to 4, arranged to remove the first optical sub-band (SB1) from the extracted first optical channel (ch1) in order to obtain a filtered first optical channel (ch1*); and

first coupling means (37) that are able to couple the first filtered optical channel to an optical signal comprising a first replacement optical sub-band (SB1') in order to deliver as output a modified first optical channel (ch1') in which the first optical sub-band (SB1) has been replaced by the first replacement optical sub-band (SB1').

9. Inserting/extracting optical node according to Claim 8, **characterized in that** the second wavelength demultiplexing means (35) is furthermore arranged to extract, from the second duplicated optical signal (S2), a second optical channel (ch2) comprising a second optical sub-band (SB2), and **in that** the node comprises:

a second bandstop optical filtering device (36') according to one of Claims 1 to 4, arranged to remove the second optical sub-band (SB2) from the extracted second optical channel (ch2) in order to obtain a filtered second optical channel (ch2*);

second coupling means (37') that are able to couple the filtered second optical channel to an optical signal comprising a second replacement optical sub-band (SB2') in order to deliver as output a second modified optical channel (ch2') in which the second optical sub-band (SB2) has been replaced by the second replacement optical sub-band (SB2'); and

wavelength-multiplexing means (38) that are arranged to multiplex at least the first and second modified optical channels in order to obtain a modified optical signal (S') in which the first and second sub-bands have respectively been replaced by the first and second replacement optical sub-band.

10. Bandstop optical filtering method for filtering at least one first optical band in an optical signal, the method comprising:

duplicating (110) the optical signal (S) into at least two duplicated optical signals;

filtering (120) the first duplicated optical signal by means of a first bandpass optical filtering unit having a transfer function (TF1) with a portion that decreases between a first passband-edge wavelength ($\lambda c1$) and a first stopband-edge wavelength ($\lambda m1$);

filtering (130) the second duplicated optical signal by means of a second bandpass optical filtering unit having a transfer function (TF2) with a portion that increases between a second stopband-edge wavelength ($\lambda m2$) and a second passband-edge wavelength ($\lambda c2$); and

combining (150) the two filtered optical signals to obtain a filtered optical signal from which the optical band comprised between the first and second stopband-edge wavelengths has been removed.

11. Bandstop optical filtering method according to Claim 10, **characterized in that**:

the optical signal (S) is duplicated into three duplicated optical signals in the duplicating step (110);

the transfer function (TF2) of the second bandstop optical filtering unit furthermore has a portion that decreases between a third passband-edge wavelength ($\lambda c3$), which is longer than the second passband-edge wavelength, and a third stopband-edge wavelength ($\lambda m3$);

the method furthermore comprises filtering (140) the third duplicated optical signal by means of a third bandpass optical filtering unit having a transfer function (TF3) with a portion that increases between a fourth stopband-edge wavelength ($\lambda m4$) and a fourth passband-edge wavelength ($\lambda c4$); and

the three filtered optical signals are combined, in the combining step (150), in order to obtain a filtered optical signal from which, furthermore, the optical band comprised between the third and fourth stopband-edge wavelengths has been removed.

12. Method (230) for replacing at least one first optical sub-band (SB) in an optical signal ($C_i$), the method comprising:

removing (231) the first optical sub-band from the optical signal by means of the bandstop optical filtering method according to Claim 10 in order to obtain a filtered signal ($C_i*$); and
adding (233) a replacement optical sub-band (SB') spectrally comprised in the first optical sub-band (SB) to the filtered optical signal in order to obtain a modified optical signal ($C_i'$) in which the first optical sub-band has been replaced by the replacement optical sub-band.

13. Method for extracting and replacing at least one first optical sub-band (SB") in an optical signal ($C_i$), the method comprising:

duplicating (210) the optical signal ($C_i$) into at least two duplicated optical signals ($C_i(1)$, $C_i(2)$);
extracting (220) the first optical sub-band from the first duplicated optical signal by means of bandpass filtering means; and
replacing (230) the first optical sub-band with a replacement optical sub-band in the second duplicated optical signal by means of the replacing method according to Claim 12.

14. Method (330) for replacing at least one first optical sub-band (SB) in a first optical channel (ch1) of an optical signal (S) composed of a plurality of wavelength-multiplexed optical channels, the method comprising:

extracting (331) the first optical channel (ch1) from the optical signal (S);
removing (333) the first optical sub-band from the optical signal by means of the bandstop optical filtering method according to Claim 10, in order to obtain a first filtered channel (ch1*); and
adding (335) a first replacement optical sub-band (SB1') spectrally comprised in the first optical sub-band (SB1) to the first filtered channel in order to obtain a modified optical channel (ch1') in which the first optical sub-band has been replaced by the first replacement optical sub-band.

15. Method for extracting and replacing at least one first optical sub-band (SB) in a first optical channel (ch1) of an optical signal (S) composed of a plurality of wavelength-multiplexed optical channels, the method comprising:

duplicating (310) the optical signal (S) into at least two duplicated optical signals (S1, S2);
extracting (320) the first optical sub-band from the first duplicated optical signal (S1) by means of demultiplexing means and bandpass filtering means; and
replacing (330) the first optical sub-band with a replacement optical sub-band in the first optical channel (ch1) of the second duplicated optical signal (S2) by means of the replacing method according to Claim 14.

FIG. 1

MAT

FIB

POL

DIFF

LENT

MIR

EP 2 673 668 B1

FIG. 2A

EP 2 673 668 B1

**FIG. 2B**

**FIG. 2C**

FIG. 2D

FIG. 3A

FIG. 3B

FIG. 3C

FIG. 4A

EP 2 673 668 B1

**FIG. 4B**

$C_i$

$C_i \longrightarrow C_i(1)$
$C_i \longrightarrow C_i(2)$ /210

200

220
$C_i(1) \xrightarrow{\text{EXT}} SB$

231
$C_i(2) \xrightarrow{\text{FILT}} C_i^* = C_i(2) - SB''$

230

233
$C_i^* + SB' \xrightarrow{\text{AGREG}} C_i'$

$C_i' / SB' \in C_i$

FIG. 5A

FIG. 5B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010284696 A1
- US 2005053325 A1